# EUROPÄISCHE PATENTSCHRIFT

(11) **EP 3 224 040 B1**
(45) Veröffentlichungstag und Bekanntmachung des Hinweises auf die Patenterteilung: **18.05.2022**
(21) Anmeldenummer: 16747765.2
(22) Anmeldetag: 29.07.2016
(51) Int. Cl.: B32B 3/18, B32B 3/20

(54) **STEG, SANDWICH-PLATTE, SANDWICH-BLOCK SOWIE DEREN HERSTELLUNGSVERFAHREN**
WEB, SANDWICH PLATE, SANDWICH BLOCK AND METHODS FOR PRODUCING SAME
NERVURE, PANNEAU STRATIFIÉ, BLOC STRATIFIÉ ET PROCÉDÉ DE FABRICATION DE CEUX-CI

(30) Priorität: 04.08.2015 DE 102015112797; 12.05.2016 DE 102016108854
(43) Veröffentlichungstag der Anmeldung: 04.10.2017
(73) Patentinhaber: Mock Beteiligungsgesellschaft mbH, 14109 Berlin (DE)
(72) Erfinder: KUHMANN, Jochen, 10783 Berlin (DE); ALBRECHT, Matthias, 10823 Berlin (DE); KUJUS-TENEKEDSHIJEW, Roman, 17192 Federow (DE)
(74) Vertreter: Schulz Junghans Patentanwälte PartGmbB
(86) Internationale Anmeldenummer: PCT/EP2016/068258
(87) Internationale Veröffentlichungsnummer: WO 2017/021344

(56) Entgegenhaltungen:
- WO-A1-03/059612

## Beschreibung

Die vorliegende Erfindung betrifft einen Steg für eine Sandwich-Platte, eine Sandwich-Platte und einen Sandwich-Block, insbesondere für den Rohbau, Innenausbau, als Baustellenplatten oder Paletten, sowie Verfahren zur Herstellung eines Stegs, einer Sandwich-Platte und eines Sandwich-Blocks.

Die vorliegende Erfindung befasst sich insbesondere mit der Herstellung einer Platte aus nachhaltigen Werkstoffen, die zugleich derart kostengünstig herstellbar ist, dass sie mit den etablierten und weniger nachhaltigen Produkten konkurrieren kann. Hierfür bieten sich grundsätzlich Holzwerkstoffe oder der schnell nachwachsende und kostengünstige Rohstoff Bambus an.

Aus dem Stand der Technik sind verschiedenste Platten und Plattenmaterialien, insbesondere hochdichte Faserplatten (HDF), für den Rohbau und den Innenausbau sowie für viele weitere Anwendungen bekannt.

Die Schrift CH 254025 A offenbart eine Mittellage aus gefaltetem Furnier, wobei das gefaltete Furnier insbesondere aus gefalteten Vollrohren besteht. Dies hat den Nachteil, dass durch die überlappenden Teile der Vollrohre ein zusätzlicher Materialaufwand entsteht und das Gewicht der Bauelemente erhöht wird.

Die Schrift DE 670799 A offenbart ein Bauelement mit einer Mittellage aus durchgängigem gewelltem Furnier. Weiterhin offenbart die Schrift DE 10 2006 054 634 B4 ein Bauelement mit einer Mittellage aus durchgängigem gewinkeltem Furnier. Ein Nachteil dieser Ausgestaltungen ist das aufwendige Herstellungsverfahren der jeweiligen Mittellage.

In der Patentanmeldung DE 10 2009 005 102 A1 ist ein Bauelement mit einer durchgängigen Mittellage aus untereinander verbundenen Winkelleisten beschrieben, die jeweils mit nur einem Schnittende mit der anliegenden Deckschicht verbunden sind. Ein Nachteil dieser durchgängigen Mittellage ist seine aufwändige Konstruktionsweise und geringe Variationsmöglichkeit bei dem entsprechenden Herstellungsverfahren.

Bekannt sind außerdem Sandwich-Platten mit einem Bambus-Kernmaterial und einer äußeren Verschalung aus Platten, wie zum Beispiel in den Druckschriften DE 42 38 562 A1, DE 20 2008 002 337 U1 und US 5,738,924 A gezeigt, wobei dort gerade oder gewellte Stegelemente oder Vollringe als Kernmaterial eingesetzt werden.

Das Dokument GB 2 234 935 A offenbart ein Bauelement mit Lagen aus Bambusrohrlängsschnitten mit jeweils 4 Schnittenden, die jeweils mit einer angrenzenden Platte mechanisch verbunden sind. Die Bambusrohrlängsschnitte weisen dabei eine an zwei Stellen geöffnete Wandung auf. Dies hat den Nachteil, dass die in den Bambusrohren vorhandenen Querverbindungen zwischen den zwei Hälften der Bambusrohrlängsschnitte essentiell sind, um eine zusammenhängende stabilisierende Struktur der Kernschicht des Bauelements zu bilden. Weiterhin zeichnen sich die Bambusrohrlängsschnitte durch einen aufwändigen Herstellungsprozess aus.

In den Schriften WO 2013 162405 A1 und WO 2013 162406 A1 ist eine Komposit-Schichtstruktur aus zwei Oberflächenlagen eines Trägermaterials und einer dazwischenliegenden Innenschicht einer verstärkten wabenförmigen Zellstruktur, die insbesondere aus längs zur Faserrichtung geschnittenen Platten bzw. Chips aus Bambus gebildet ist, wobei die Längserstreckung der Platten bzw. Chips in Faserrichtung wesentlich geringer ist als die Breite und Tiefe der Oberflächenlagen. Eine solche Kernschicht ist in der Herstellung aufwändig, da zum Einen das Schneiden der Platten oder Chips aus Bambusrohren aufwändig ist, und andererseits eine Vielzahl von Platten bzw. Chips auf dem Trägermaterial angeordnet und mit dem Trägermaterial verbunden werden muss.

Die Verwendung von Bambusvollringen nutzt den grundsätzlichen Vorteil, dass der Zwischenverarbeitungsschritt des Bambus-Rohmaterials zu Plattenmaterial, in der Regel als Sperrholz, eingespart wird und zugleich die hervorragenden natürlichen mechanischen Eigenschaften von Bambus-Rohmaterial genutzt werden können. Insbesondere weil Bambus als Naturprodukt sehr unterschiedliche Durchmesser aufweist, insbesondere innerhalb eines Halms, ist eine derart gefertigte Sandwich-Platte bisher nicht zu akzeptierten Preisen auf dem Markt platzierbar.

Die Schrift WO 03/059 612 beschreibt ein Isoliermaterial, das insbesondere zur Verwendung in Schlafsäcken und ähnlichen Artikeln geeignet ist. Das Isoliermaterial weist mindestens zwei Lagen eines Vliesmaterials auf, wobei zwischen diesen Lagen eine Vielzahl von flexiblen Elementen angeordnet ist.Weiterhin sind Verfahren zur Herstellung von Holzkörpern, wie beispielsweise Holzbriketts, aus einer Holzfasern oder Holzspäne aufweisenden Holzmasse (als Dendromasse bezeichnet), bekannt. Beispielsweise offenbart die Druckschrift DE 10 2012 021 612 A1 ein Verfahren zur Herstellung von Holzbriketts mittels eines Extruders.

Hiervon ausgehend liegt der vorliegenden Erfindung die Aufgabe zugrunde, einen Steg, eine Sandwich-Platte sowie einen Sandwichblock zur Verfügung zu stellen, die sich durch hohe mechanische Stabilität, Nachhaltigkeit und kostengünstige Herstellbarkeit auszeichnen. Die erfindungsgemäßen Merkmale ergeben sich aus den unabhängigen Ansprüchen 1, 9, 10, 14 und 15. Ausführungsformen des erfindungsgemäßen Stegs sind in den Unteransprüchen 2-8 beschrieben. Ausführungsformen des erfindungsgemäßen Sandwich-Blocks sind in den Unteransprüchen 11-13 beschrieben. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Gemäß einem ersten Aspekt der Erfindung wird ein Steg, insbesondere für eine Sandwich-Platte nach dem vierten Aspekt der Erfindung, zur Verfügung gestellt, wobei der Steg wenigstens die folgenden Komponenten aufweist: eine Stegbasis und wenigstens ein Rohrsegment, das jeweils eine Wandung aufweist, die in Umfangsrichtung des jeweiligen Rohrsegments durch mindestens zwei, insbesondere genau zwei, Schnittenden begrenzt ist, wobei die Wandung in Längserstreckungsrichtung des Rohrsegments durch zwei Schnittflächen begrenzt ist, und wobei das wenigstens eine Rohrsegment jeweils eine Segmenthöhe aufweist, welche die maximale Erstreckung des jeweiligen Rohrsegments senkrecht zu der Stegbasis darstellt, und wobei das wenigstens eine Rohrsegment eine in Längserstreckungsrichtung verlaufende Segmenttiefe aufweist, und wobei der Steg eine Stegtiefe aufweist, die in der Längserstreckungsrichtung des wenigstens einen Rohrsegments verläuft.

Dabei ist das wenigstens eine Rohrsegment jeweils mittels der mindestens zwei Schnittenden mit der Stegbasis mechanisch verbunden, wobei die Stegtiefe gleich groß ist wie die Segmenttiefe des wenigstens einen Rohrsegments.

Das wenigstens eine Rohrsegment des erfindungsgemäßen Stegs besteht aus einem Holzwerkstoff oder weist einen Holzwerkstoff auf.

Gemäß einer Ausführungsform weist der Steg eine Stegbasis und wenigstens ein Rohrsegment, insbesondere mehrere Rohrsegmente, auf. Dabei weist das wenigstens eine Rohrsegment jeweils eine Wandung auf, die in Umfangsrichtung des jeweiligen Rohrsegments durch zwei Schnittenden begrenzt ist, wobei das wenigstens eine Rohrsegment jeweils mittels wenigstens eines der Schnittenden, insbesondere mittels beider Schnittenden, mit der Stegbasis mechanisch verbunden ist. Die Wandung des wenigstens einen Rohrsegments ist in Längserstreckungsrichtung des jeweiligen Rohrsegments durch zwei Schnittflächen begrenzt. Das wenigstens eine Rohrsegment besteht aus einem Holzwerkstoff oder weist einen Holzwerkstoff auf.

Das wenigstens eine Rohrsegment weist jeweils eine in Längserstreckungsrichtung verlaufende Segmenttiefe und eine Segmenthöhe auf, welche die maximale Erstreckung des jeweiligen Rohrsegments senkrecht zu der Stegbasis des Stegs darstellt. Weiterhin weist das Rohrsegment eine Segmentbreite senkrecht zu der Segmenthöhe und senkrecht zu der Segmenttiefe, also in der dritten Raumrichtung, auf.

Im Zusammenhang der vorliegenden Erfindung ist mit dem Begriff Rohrsegment ein Teil eines wirklichen oder gedachten Rohres mit einer Längserstreckungsrichtung gemeint. Der Querschnitt des Rohres senkrecht zu seiner Längserstreckungsrichtung weist einen Umfang, also eine gedachte Linie, welche den Querschnitt an seiner Außenseite begrenzt, auf. Dabei ist der Querschnitt nicht zwangsläufig kreisförmig, sondern kann insbesondere auch eckig oder elliptisch ausgeformt sein. Die Umfangsrichtung des Rohres verläuft (auch im Fall eines Rohres mit einem eckigen Querschnitt) entlang eines gedachten Kreises, welcher den Querschnitt des Rohres senkrecht zur Längserstreckungsrichtung umgibt.

Das Rohrsegment zeichnet sich durch eine in Umfangsrichtung angeordnete Öffnung seiner Wandung aus. Die Öffnung ist dabei in Längserstreckungsrichtung durchgehend. Dabei ist mit der Umfangsrichtung des Rohrsegments die Umfangsrichtung des zugehörigen wirklichen oder gedachten Rohres gemeint, welches eine geschlossene Wandung aufweist. Das Rohrsegment kann insbesondere durch Schneiden des Rohres gebildet sein, kann aber auch auf andere Weise, insbesondere durch das mechanische Verbinden mehrerer Leisten oder durch ein Extruderverfahren, gebildet sein.

Die Schnittenden des Rohrsegments begrenzen das Rohrsegment in Umfangsrichtung. Die Öffnung des Rohrsegments in Umfangsrichtung wird also durch die Schnittenden begrenzt. Besagte Öffnung führt dazu, dass der Querschnitt des Rohrsegments durch ein offenes Profil gebildet ist. Das offene Profil kann insbesondere kreissegmentförmig, z.B. halbkreisförmig, U-förmig oder V-förmig ausgeformt sein.

Mit dem Begriff Längserstreckungsrichtung des Rohrsegments ist im Zusammenhang der vorliegenden Erfindung die Längserstreckungsrichtung des dazugehörigen (wirklichen oder gedachten) Rohres gemeint.

Wird das Rohrsegment mit den Schnittenden auf eine ebene Fläche aufgesetzt, so ist die maximale Segmenthöhe der Abstand zwischen dieser ebenen Fläche und dem höchsten Punkt des Rohrsegments. Die Segmentbreite ist der Abstand der maximalen Erstreckung parallel zu dieser ebenen Fläche senkrecht zu der Segmenthöhe und Segmenttiefe.

In Richtung seiner Längserstreckung, also entlang seiner Segmenttiefe, wird das Rohrsegment durch zwei Schnittflächen begrenzt. Dabei sind die Schnittflächen insbesondere senkrecht zu der Längserstreckungsrichtung ausgerichtet. Die Schnittflächen können aber auch schräg zu der Längserstreckungsrichtung verlaufen.

Die Rohrsegmente eines erfindungsgemäßen Stegs können insbesondere durch Zerteilen eines Halbrohrs quer zu der Längserstreckung des Halbrohrs, z.B. mittels einer Streifensäge (auch als Mehrblattsäge bezeichnet) hergestellt werden. In diesem Fall werden die Schnittflächen des erzeugten Rohrsegments an den Zerteilungsstellen gebildet. Ein entsprechendes Halbrohr kann wiederum insbesondere durch Zerteilen eines Rohrs parallel zur Längserstreckung des Rohrs hergestellt werden, wobei an der Zerteilungsstelle die Schnittenden gebildet werden. Alternativ dazu können die Rohrsegmente eines Stegs insbesondere auch aus Leisten, z.B. durch Verleimen der Leisten, gebildet sein. Dabei verlaufen die Leisten in Richtung der Längserstreckungsrichtung des Rohrsegments. Bei dieser Ausführungsform wird insbesondere ein Rohrsegment mit einem eckigen Querschnitt gebildet.

Gemäß einer Ausführungsform weist der Steg eine Mehrzahl von Rohrsegmenten auf, wobei die Rohrsegmente in Bezug auf ihre Längserstreckungsrichtung parallel angeordnet sind. Dabei weist der Steg eine Stegtiefe auf, die in der gemeinsamen Längserstreckungsrichtung seiner Rohrsegmente verläuft. Insbesondere weisen die Rohrsegmente des Stegs dieselbe Segmenttiefe auf und die Stegtiefe ist gleich groß wie die gemeinsame Segmenttiefe der Rohrsegmente. Hierbei weist der Steg eine Stegbreite in Richtung der Segmentbreite der Rohrsegmente auf. Die Stegbasis des Stegs weist eine Basishöhe in Richtung der Segmenthöhe seiner Rohrsegmente auf.

Gemäß einer Ausführungsform des Stegs besteht die Stegbasis aus einem Holzwerkstoff oder weist einen Holzwerkstoff auf.

Ein erfindungsgemäßer Steg zeichnet sich insbesondere durch eine hohe mechanische Belastbarkeit in Längserstreckungsrichtung seiner Rohrsegmente aus und ist daher gut zum Aufbau von Strukturen für den Roh- und/ oder Innenausbau, insbesondere erfindungsgemäßer Sandwich-Platten und Sandwich-Blocks, geeignet.

Der Begriff Holzwerkstoff bezeichnet im Zusammenhang der vorliegenden Erfindung einen Werkstoff, welcher zerkleinertes Holz, insbesondere Holzspäne, Hackschnitzel, Holzfurniere, Holzfurnierstreifen, Holzwolle, Holzfasern oder Holzstäube, oder andere Lignocellulosematerialien aufweist. Weiterhin kann der Holzwerkstoff insbesondere Bindemittel, Klebstoffe und/ oder Additiva aufweisen. Additiva können insbesondere Hydrophobisierungsmittel, Holzschutzmittel, Flammschutzmittel, Härter oder Farbpartikel sein. Zu den Bindemitteln gehören insbesondere Harnstoffleim, Kunstharze, z.B. Phenolharze, Isocyanate, Kunststoffe und/ oder Biokunststoffe. Holzfurniere und/ oder Holzfurnierstreifen dienen dabei insbesondere zur Herstellung von Sperrholz und/ oder Grobspanplatten (OSB-Platten).

Zu den Holzwerkstoffen gehören insbesondere Vollholzwerkstoffe, z.B. Massivholzplatten (gemäß DIN EN 12775) oder Leimholzplatten, Brettsperrholz, Brettschichtholz, Stabsperrholz und/ oder lamelliertes Holz, Furnierholzwerkstoffe, z.B. Furniersperrholz (FU), Furnierschichtholz, Furnierstreifenholz, Biegesperrholz, Holzspanwerkstoffe, z.B. Flachpressplatten (P2), Strangpressplatten, Spanholzformteile, Grobspanplatten (OSB-Platten, gemäß DIN EN 300) und/ oder Spanstreifenholz (LSL), Holzfaserwerkstoffe, z.B. Holzfaserdämmplatten (HFD), poröse Faserplatten, Soft Boards (SB), mittelharte Faserplatten (MB), harte Faserplatten (HB oder HFH), Hartfaserplatten, extraharte Faserplatten (HFE), mitteldichte Faserplatten (MDF), hochdichte Faserplatten *(high density fiberboards,* HDF) und/ oder ultraleichte Faserplatten (ULDF), Arboform oder Flüssigholz.

Dabei bezeichnet der Begriff Faserplatten die in DIN EN 622 spezifizierten Holzwerkstoffe. Der Begriff Spanplatten bezeichnet die in den Normen DIN EN 309 und DIN EN 312 spezifizierten Holzwerkstoffe. Der Begriff Sperrholz bezeichnet die in den Normen DIN 68708 und DIN EN 313 spezifizierten Holzwerkstoffe.

Holzwerkstoffe haben als Grundmaterial für den Roh- und Innenausbau den Vorteil einer großen Materialfestigkeit und mechanischer Belastbarkeit bei gleichzeitiger Leichtigkeit.

Gemäß einer weiteren Ausführungsform weist der Holzwerkstoff einen Ligningehalt von >5%, insbesondere >10% Gewichtsanteil auf. Das bedeutet, dass insbesondere Papier und Pappe keine Holzwerkstoffe im Sinne der vorliegenden Erfindung darstellen, da bei der Papierherstellung z.B. durch chemische Bleichmittel das Lignin der verwendeten Holzrohstoffe weitgehend entfernt wird.

Gemäß einer weiteren Ausführungsform ist der Holzwerkstoff frei von chemischen Bleichmitteln.

Gemäß einer weiteren Ausführungsform ist der Holzwerkstoff in einem Trockenverfahren bei einer Holzfeuchte von < 20 % hergestellt. Dabei bezieht sich die prozentuale Angabe auf das Verhältnis des Wassergewichtes zu der absolut trockenen Holzmasse. Bei einem Trockenverfahren werden die Holzpartikel vor der Fliesbidlung und dem Pressen zum Produkt getrocknet und das Produkt weist eine Holzfeuchte von unter 20% auf. Der Leimauftrag kann vor oder nach dem Trocknen erfolgen.

Gemäß einer weiteren Ausführungsform weist der Holzwerkstoff unter Druck und/ oder Hitze verpresste Holzfasern auf. Gemäß einer weiteren Ausführungsform weist der Holzwerkstoff eine Dichte von >800 kg/m³ auf. Hochdichte Faserplatten weisen beispielsweise eine Dichte in dem genannten Bereich auf.

Gemäß einer weiteren Ausführungsform ist das Rohrsegment aus einem Material einer hochdichten Faserplatte (HDF) gebildet. Hochdichte Faserplatten (HDF) weisen eine besonders hohe Festigkeit auf.

Gemäß einer weiteren Ausführungsform ist das Rohrsegment aus einer Mehrzahl von Leisten gebildet. Dabei verlaufen die Leisten in Längserstreckungsrichtung des Rohrsegments. Bei dieser Ausführungsform wird insbesondere ein Rohrsegment mit einem eckigen Querschnitt gebildet.

Gemäß einer Ausführungsform ist wenigstens ein Rohrsegment des Stegs aus gepresstem Holz, insbesondere gepressten Holzfasern oder Holzspänen gefertigt. Z.B. kann das Rohrsegment durch Zerteilen eines Rohrs aus gepresstem Holz gefertigt werden. Die Herstellung eines solchen Rohrs kann z.B. durch Verpressen einer Holzmasse umfassend zerkleinertes Holz, insbesondere Holzfasern oder Holzspäne, in einen Pressformkanal mit einer rohrförmigen Aussparung und Aushärten der Holzmasse gefertigt werden. Alternativ dazu kann auch ein Halbrohr oder Rohrsegment direkt durch Verpressen einer Holzmasse, insbesondere in einem Pressformkanal mit einer rohrsegmentförmigen Aussparung oder durch ein Flachpresswerkzeug mit einer geeigneten Kontur, gefertigt werden.

Gemäß einer weiteren Ausführungsform ist der Holzwerkstoff mittels eines Extruderverfahrens aus einer Holzmasse, insbesondere einer Dendromasse, hergestellt.

Eine Verwendung von gepresstem Holz erlaubt eine kostengünstige Herstellung von Rohren oder Rohrsegmenten nahezu beliebiger Form und Dimensionierung, wobei eine sehr einheitliche Dimensionierung der Rohre bzw. Rohrsegmente im Vergleich zu Naturprodukten erreicht werden kann.

Gemäß einer Ausführungsform weist der Steg eine Stegbasis und eine Mehrzahl von Rohrsegmenten auf, wobei jedes Rohrsegment der Mehrzahl von Rohrsegmenten eine Wandung aufweist, die in Umfangsrichtung des jeweiligen Rohrsegments durch zwei Schnittenden begrenzt ist, und wobei jedes Rohrsegment der Mehrzahl von Rohrsegmenten jeweils mittels beider Schnittenden mit der Stegbasis mechanisch verbunden ist, und wobei jedes Rohrsegment der Mehrzahl von Rohrsegmenten aus einem Holzwerkstoff besteht oder einen Holzwerkstoff aufweist.

Gemäß einer Ausführungsform weist der Steg wenigstens zwei Rohrsegmente auf, wobei die wenigstens zwei Rohrsegmente dieselbe Segmenthöhe aufweisen. Dabei stellt die Segmenthöhe die maximale Erstreckung des Rohrsegments senkrecht zu der Längserstreckungsrichtung des Rohrsegments und senkrecht zu der Umfangsrichtung des Rohrsegments dar.

Gemäß einer weiteren Ausführungsform weist der Steg eine Mehrzahl von Rohrsegmenten auf, wobei alle Rohrsegmente der Mehrzahl von Rohrsegmenten dieselbe Segmenthöhe aufweisen.

Aufgrund einer solchen einheitlichen Segmenthöhe können erfindungsgemäße Stege ohne Entstehung unnötiger Hohlräume parallel angeordnet oder gestapelt werden. Dadurch können leicht stabile größere Strukturen, z.B. Kernschichten für eine Sandwich-Platte gemäß dieser Erfindung, aus derartigen Stegen erzeugt werden, ohne dass Hohlräume beispielsweise mit einer Füllmasse ausgefüllt werden müssen.

Zudem ergibt sich der Vorteil, dass mehrere Schichten bzw. Lagen von erfindungsgemäßen Stegen aufgrund ihrer einheitlichen Segmenthöhe besser regelmäßig angeordnet werden können, was insbesondere bei der Herstellung eines erfindungsgemäßen Sandwich-Blocks und einer erfindungsgemäßen Sandwich-Platte vorteilhaft ist.

Gemäß einer weiteren Ausführungsform weist die Wandung des wenigstens einen Rohrsegments eine Abflachung auf. Eine solche Abflachung kann durch die Form der Wandung des Rohrsegments gegeben sein, beispielsweise bei einem eckigen, insbesondere U-förmigen, trapezsegmentförmigen oder achtecksegmentförmigen Querschnitt. In diesem Fall wird die Abflachung durch eine Fläche gebildet, welche an beiden Seiten, das heißt an beiden Schnittflächen durch eine Kante der eckigen Querschnittsform begrenzt ist. Dabei ist die entsprechende Kante im Bereich der maximalen Segmenthöhe angeordnet.

Gemäß einer weiteren Ausführungsform weist die Wandung des Rohrsegments einen eckigen Querschnitt, insbesondere einen U-förmigen, trapezsegmentförmigen oder achtecksegmentförmigen Querschnitt auf.

Gemäß einer weiteren Ausführungsform weist die Wandung des Rohrsegments einen U-förmigen Querschnitt auf.

Gemäß einer weiteren Ausführungsform weist die Wandung des Rohrsegments einen trapezsegmentförmigen Querschnitt auf.

Gemäß einer weiteren Ausführungsform weist die Wandung des Rohrsegments einen achtecksegmentförmigen Querschnitt auf.

Rohre mit einem eckigen Wandungsquerschnitt sind insbesondere durch Erzeugen von Leisten unter Ausfräsen von Gehrungen aus einem Brett und Zusammenfügen der Leisten kostengünstig herstellbar. Insbesondere können hierfür aus Holzmasse gepresste Bretter verwendet werden. Solche Bretter können insbesondere hochdichte Faserplatten (HDF) sein. Dabei werden insbesondere die Gehrungen derart ausgeführt, dass die erzeugten Leisten mittels der Gehrungen nicht vollständig voneinander getrennt werden. Ein Vorteil dieser Ausgestaltung ist die einfachere Zusammenfügbarkeit des Rohres aus den Leisten. Zudem bilden die Gehrungen hierbei Vertiefungen zur Aufnahme von Leim, was das Zusammenfügen des Rohrs aus den Leisten vereinfacht.

Gemäß einer Ausführungsform des Stegs sind beide Schnittenden des wenigstens einen Rohrsegments durch einen gemeinsamen Sekantenschnitt durch ein Rohr gebildet. Dies hat zur Folge, dass die beiden Schnittenden mittels dieses einen einzigen Schnitts bereits in einer Ebene und parallel zueinander ausgeformt sind. Insbesondere wird ein Rohr in zwei Hälften zweigeteilt, also der Schnitt diametral durch das Rohrmaterial geführt.

Gemäß einer weiteren Ausführungsform sind beide Schnittenden des wenigstens einen Rohrsegments jeweils durch einen radialen Schnitt durch ein Rohr gebildet. Hierbei sind aus einem Rohr mehr als zwei Segmentstangen herstellbar. Werden aus einem Rohr mehr als zwei Segmentstangen hergestellt, so sind die Schnittenden von wenigstens zwei der gebildeten Segmentstangen nicht parallel, sondern in einem Winkel zueinander ausgerichtet. Die hierdurch entstehende kehlförmige Lücke zwischen wenigstens einem Schnittende und der Stegbasis kann hierbei zum Beispiel durch ein Klebstoffvolumen aufgefüllt werden. Alternativ werden die Schnittenden durch Egalisieren, zum Beispiel Hobeln, derart nachbearbeitet, dass die Schnittenden parallel auf einer Fügefläche auflegbar sind.

Gemäß einer weiteren Ausführungsform weist der Steg wenigstens zwei Rohrsegmente auf, wobei jeweils wenigstens ein Schnittende der wenigstens zwei Rohrsegmente mit einer ersten Fläche der Stegbasis mechanisch verbunden ist. Insbesondere sind jeweils beide Schnittenden mit der ersten Fläche der Stegbasis mechanisch verbunden. Bei dieser Ausführungsform sind die Rohrsegmente des Stegs auf einer Seite der Stegbasis, insbesondere nebeneinander angeordnet. Hierbei kann auf der Seite der Stegbasis, welche keine Rohrsegmente aufweist, eine formschlüssige Verbindung des Stegs beispielsweise mit einer Platte oder einem weiteren Steg mittels der Stegbasis gebildet werden. Insbesondere weisen die wenigstens zwei Rohrsegmente hierbei dieselbe Segmenthöhe senkrecht zu der ersten Fläche auf.

Gemäß einer weiteren Ausführungsform weist der Steg wenigstens ein erstes Rohrsegment und wenigstens ein zweites Rohrsegment auf, wobei jeweils wenigstens ein Schnittende, insbesondere beide Schnittenden, des wenigstens einen ersten Rohrsegments mit einer ersten Fläche der Stegbasis verbunden ist, und wobei jeweils wenigstens ein Schnittende, insbesondere beide Schnittenden, des wenigstens einen zweiten Rohrsegments mit einer der ersten Fläche gegenüberliegenden zweiten Fläche der Stegbasis verbunden ist. Dabei weist der Steg insbesondere eine Mehrzahl von ersten Rohrsegmenten und eine Mehrzahl von zweiten Rohrsegmenten auf, wobei entlang einer Stegbreite die ersten Rohrsegmente und die zweiten Rohrsegmente abwechselnd entlang der Stegbasis angeordnet sind. Bei dieser Ausführungsform sind die Rohrsegmente des Stegs auf beiden Seiten der Stegbasis, insbesondere nebeneinander angeordnet. Insbesondere können die Rohrsegmente versetzt, beispielsweise um eine Segmentbreite versetzt, zueinander angeordnet sein, so dass sich insbesondere im Querschnitt der Rohrsegmente ein wellenförmiges Profil ergibt. Dabei weisen die mit derselben Fläche der Stegbasis verbundenen Rohrsegmente jeweils einen Abstand zu den benachbarten Rohrsegmenten auf.

Gemäß einer weiteren Ausführungsform weist der Steg eine Mehrzahl von ersten Rohrsegmenten und eine Mehrzahl von zweiten Rohrsegmenten auf, wobei die ersten Rohrsegmente jeweils mittels wenigstens eines Schnittendes, insbesondere beider Schnittenden mit einer ersten Fläche der Stegbasis verbunden sind, und wobei die zweiten Rohrsegmente jeweils mittels einer der ersten Fläche gegenüberliegenden zweiten Fläche verbunden sind, und wobei die ersten Rohrsegmente und die zweiten Rohrsegmente jeweils eine durchgängige Reihe bilden. Bei dieser Ausführungsform ist also zwischen benachbarten ersten Rohrsegmenten und zwischen benachbarten zweiten Rohrsegmenten im Wesentlichen kein Abstand vorhanden.

Gemäß einer weiteren Ausführungsform des Stegs beträgt das Verhältnis der Basishöhe zu der Stegtiefe zwischen 1:1 und 1:20, insbesondere zwischen 2:3 und 1:10.

In einer Ausführungsform der Kernschicht beträgt die Stegtiefe zwischen 1 mm und 150 mm, insbesondere zwischen 3 mm und 120 mm, vor allem zwischen 7 mm und 100 mm.

Gemäß einer weiteren Ausführungsform des Stegs ist die Wandung des wenigstens einen Rohrsegments gewölbt ausgeformt.

Gemäß einer weiteren Ausführungsform des Stegs weist die Wandung des Rohrsegments einen kreissegmentförmigen Querschnitt auf. Solche Rohrsegmente sind insbesondere durch Zerteilen eines geeigneten Rohrs leicht herstellbar.

Gemäß einer weiteren Ausführungsform weist der Steg eine Mehrzahl von in Bezug auf ihre Längserstreckungsrichtung parallel angeordneter Rohrsegmente mit einer senkrecht zu der Segmenthöhe und der Längserstreckungsrichtung verlaufenden Segmentbreite auf, wobei benachbarte Rohrsegmente senkrecht zu der gemeinsamen Längserstreckungsrichtung einen Abstand aufweisen, und wobei der Abstand dem einbis zweifachen der Segmentbreite, insbesondere genau der Segmentbreite, entspricht.

Insbesondere wird ein Steg durch Verbinden, insbesondere Verkleben, einer Segmentstange mit den Schnittenden auf einer Basisplatte als Zwischenprodukt hergestellt, wobei anschließend die Stege durch Zerteilen dieses Zwischenprodukts quer zur Längserstreckung (Segmenttiefe) der Segmentstange, zum Beispiel mittels einer Streifensäge, gefertigt werden. Hierbei werden automatisch die Stegbasis und das Rohrsegment mit exakt der gleichen Tiefe geformt.

Gemäß einem zweiten Unteraspekt bildet das wenigstens eine Rohrsegment des erfindungsgemäßen Stegs eine gewölbte Wandung, wobei die gewölbte Wandung eine maximale Segmenthöhe (h) in Auswölbungsrichtung, eine Segmentbreite (w) quer zur Auswölbungsrichtung und eine Segmenttiefe (d) in Richtung einer Rohrerstreckung aufweist, wobei die Segmenttiefe (d) durch zwei Schnittflächen begrenzt ist und die gewölbte Wandung durch mindestens zwei, insbesondere genau zwei, Schnittenden begrenzt ist, wobei das mindestens eine Rohrsegment mittels der mindestens zwei Schnittenden mit der Stegbasis verbunden ist.

Gemäß einer Ausführungsform wird ein Steg für eine Sandwich-Platte zur Verfügung gestellt, der zumindest die folgenden Komponenten aufweist: eine Stegbasis und wenigstens ein Rohrsegment, wobei das Rohrsegment eine gewölbte Wandung bildet, und wobei die gewölbte Wandung eine maximale Segmenthöhe (h) in Auswölbungsrichtung, eine Segmentbreite (w) quer zur Auswölbungsrichtung und eine Segmenttiefe (d) in Richtung einer Rohrerstreckung aufweist, wobei die Segmenttiefe (d) durch zwei Schnittflächen begrenzt ist und die gewölbte Wandung durch zwei Schnittenden begrenzt ist, wobei das mindestens eine Rohrsegment mittels zumindest eines Schnittendes mit der Stegbasis verbunden ist. Der hier vorgeschlagene Steg ist insbesondere als Kernmaterial für eine Sandwich-Platte geeignet. Der Steg weist eine besonders hohe Festigkeit insbesondere in Richtung der Rohrerstreckung auf. Es sei an dieser Stelle darauf hingewiesen, dass das Rohrsegment besonders kostengünstig aus einem Stangenhalbstück, zum Beispiel aus einem Rohr oder aus einer Segmentstange, zum Beispiel einem Halbrohr, mit einer Stangenlänge, welche sich quer zur (Hohl-) Wandung erstreckt, fertigbar ist, indem dieses Stangenhalbstück mittels einer Streifensäge (auch als Mehrblattsäge bezeichnet) quer zur Stangenlänge in Streifen oder Scheiben zerteilt wird. Insbesondere ist das Rohrsegment direkt aus einem Bambusrohr hergestellt, wobei das Bambusrohr der (Stangen-) Länge nach in mehrere, insbesondere zwei, Segmente zerteilt, insbesondere gespalten oder zersägt, wird und anschließend wie oben beschrieben in einzelne Scheiben quer zur Länge des Bambusrohrs, also quer zur Faserrichtung, zerteilt, insbesondere zersägt, wird. Die Erfindung ist jedoch nicht auf diese Herstellung beschränkt. Auch kann das Rohrsegment Restmaterial von anderen Fertigungsverfahren darstellen. Es können hierbei Holzwerkstoffe eingesetzt werden, wobei insbesondere diese Materialien als, insbesondere hohles, beziehungsweise gewölbtes, Stangenhalbstück vorliegen. Hervorzuheben sind hier die besonders nachhaltige Verwendung von Massenprodukten.

Die Stegbasis ist aus einem beliebigen Material gebildet, und insbesondere zersägt aus Plattenmaterial, und bildet einen einzelnen Streifen. Insbesondere ist hierbei die Stegtiefe (D), soweit es das jeweilige Fertigungsverfahren zulässt, gleich groß, insbesondere exakt gleich groß, wie eine Segmenttiefe (d) des zugehörigen Rohrsegments. Die Erfindung ist jedoch nicht auf diese Herstellung beschränkt. So kann zum Beispiel eine Stegbasis aus einem Gussmaterial als Plattenmaterial oder in der fertigen Form hergestellt sein. Auch kann die Stegbasis Restmaterial von anderen Fertigungsverfahren darstellen. Es können hierbei Metalle, Holzwerkstoffe, Kunststoffe, Papier, Pappe oder andere Materialien eingesetzt werden, wobei insbesondere diese Materialien als Plattenmaterial vorliegen oder zu Plattenmaterial fügbar ist, insbesondere durch Leimen.

Das Rohrsegment weist eine gewölbte Wandung auf. Das heißt, das Rohrsegment ist kein ebenes Material, sondern weist einen Radius auf, wobei der Radius nicht konstant sein muss. Die Wölbung kann hierbei zum Beispiel auch durch einen scharfen Knick, zumindest eine Wellung oder ähnliche Formen gebildet sein. Beispielsweise ist hierfür ein Stangenhalbstück mit einem eckigen Rohrquerschnitt verwendbar. Infolge der Wölbung weist das Rohrsegment eine maximale Segmenthöhe (h) auf, welche insbesondere mindestens doppelt so groß ist wie die Stärke (t) der Wandung. Das Rohrsegment weist zwei Schnittenden auf. Wird das Rohrsegment mit den Schnittenden auf eine ebene Fläche aufgesetzt, so ist die maximale Segmenthöhe (h) der Abstand zwischen dieser ebenen Fläche und dem höchsten Punkt des Rohrsegments beziehungsweise dessen Wölbung. Die Segmentbreite (w) ist der Abstand der maximalen Erstreckung parallel zu dieser ebenen Fläche, also senkrecht zur maximalen Segmenthöhe (h). Die Auswölbungsrichtung ist die Richtung der Segmenthöhe (h) Die Segmenttiefe (d) stellt die Erstreckung des Rohrsegments in der dritten Raumrichtung dar, sodass bei einem orthogonal zur Längenrichtung eines Bambusrohrs geschnittenen Rohrsegment die Segmenttiefe (d) parallel zur (Haupt-) Faserrichtung des Bambusrohrs ausgerichtet ist. Die Segmenttiefe (d) ist senkrecht zu den Schnittflächen ausgerichtet und stellt den Abstand zwischen diesen Schnittflächen dar. Bei einem Rohr als Stangenhalbstück, welches schräg zur Längenerstreckung in einzelne Rohrsegmente zerteilt ist, ist die Segmenttiefe nicht parallel zu der Längenerstreckung, sondern senkrecht zur Zerteilungsebene ausgerichtet. In einer Ausführungsform ist ein Rohrsegment U-förmig, wobei die Vorderseite und Rückseite der U-Form die Schnittflächen bilden und die beiden (oberen) offenen Enden der U-Form die Schnittenden bilden. Diese Definition gilt entsprechend für andere Formen eines Rohrsegments.

Insbesondere wird ein Steg durch Verbinden, z.B. Verkleben, einer Segmentstange mit den Schnittenden auf einer Basisplatte als Zwischenprodukt hergestellt, wobei anschließend die Stege durch Zerteilen dieses Zwischenprodukts quer zur Längenerstreckung (Stangenlänge) der Segmentstange, zum Beispiel mittels einer Streifensäge, gefertigt werden. Hierbei werden automatisch die Stegbasis und das Rohrsegment mit exakt der gleichen Tiefe (D, d) geformt. Ein weiterer Vorteil bei diesem Fertigungsverfahren der Segmentstange aus einem Rohrmaterial oder Halbrohrmaterial ist, dass die Schnittenden in der Regel eine von den Außenflächen (also zum Beispiel Zylinderoberflächen) verschiedene Oberflächenbeschaffenheit aufweisen, die sich besser zum Verkleben eignet. Insbesondere bei Bambusrohren sind die Außenflächen (außen und/oder innen) besonders glatt und zum Kleben ungeeignet. Infolge des Schneidens beziehungsweise Zersägens wird an den Schnittenden eine unbeschichtete Oberfläche freigelegt beziehungsweise die Oberfläche aufgeraut. Somit lässt sich eine solche Segmentstange schnell und einfach auflegen und kostengünstig verkleben. Zum Verkleben von den Schnittenden eines Rohrsegments aus Bambusrohr ist ein Polyurethan-Klebstoff besonders geeignet. Gemäß einer weiteren Ausführungsform des Stegs ist das wenigstens eine Rohrsegment jeweils eine Scheibe eines Bambusrohres, wobei insbesondere die Stegbasis aus Bambus-Sperrholz gebildet ist.

Eine Scheibe ist ein durch einen quer zur Stangenlänge geführten Schnitt, insbesondere mittels Sägens, gebildeter Abschnitt, sodass dadurch, insbesondere ohne weitere Bearbeitungsschritte, die Schnittflächen mit dem Abstand der Segmenttiefe (d) beziehungsweise Stegtiefe (D) gebildet werden. Grundsätzlich können verschiedene Materialien, sofern sie sich (insbesondere kostengünstig) miteinander verbinden lassen, miteinander kombiniert werden. In Hinsicht zumindest auf die Nachhaltigkeit, aber auch auf das spezifische Gewicht und die Kosten ist es besonders vorteilhaft, Bambusmaterial zu verwenden. Ein weiterer Vorteil der Verwendung von Bambusmaterial sowohl für das Rohrsegment als auch für die Stegbasis sind die gleichen beziehungsweise sehr ähnlichen Klebeeigenschaften, ähnliche thermische Ausdehnung und ähnliches Verhalten bei Feuchtigkeit.

Gemäß einer vorteilhaften Ausführungsform des Stegs sind beide Schnittenden durch einen gemeinsamen Sekantenschnitt durch ein Rohr gebildet.

Der Vorteil dieser Ausführungsform ist, dass die beiden Schnittenden mittels dieses einen einzigen Schnitts bereits in einer Ebene und parallel zueinander ausgeformt sind. Besonders insbesondere wird ein Rohr in zwei Hälften zweigeteilt, also der Schnitt diametral durch das Rohrmaterial geführt. Bei Naturmaterial, wie zum Beispiel Bambus, sind die Längenerstreckung und der Durchmesser, sowie die Lage des Zentrums des Durchmessers über die Länge nicht unbedingt exakt gleich. Hierbei wird insbesondere dieser Sekantenschnitt entsprechend dem Durchmesser und der Lage des Zentrums bei einer Einspannung der zerteilenden, insbesondere sägenden, Maschine ausgeführt. Für einige Anwendungszwecke kann es vorteilhaft sein, durch eine Parallelverlagerung des Sekantenschnitts zum Durchmesser, also zu der diametralen Sekante, eine gewünschte Höhe des Rohrsegments einzustellen.

Gemäß einer vorteilhaften Ausführungsform des Stegs sind beide Schnittenden jeweils durch einen radialen Schnitt durch ein Rohr gebildet.

Der Vorteil dieser Ausführungsform ist, dass hierbei aus einem Rohr mehr als zwei Segmentstangen herstellbar sind. Werden aus einem Rohr mehr als zwei Segmentstangen hergestellt, so sind die Schnittenden von zumindest zwei der gebildeten Segmentstangen nicht parallel, sondern in einem Winkel zueinander ausgerichtet. Die hierdurch entstehende kehlförmige Lücke zwischen zumindest einem Schnittende und der Stegbasis kann hierbei zum Beispiel durch ein Klebstoffvolumen aufgefüllt werden. Alternativ werden die Schnittenden durch Egalisieren, zum Beispiel Hobeln, derart nachbearbeitet, dass die Schnittenden parallel auf einer Fügefläche auflegbar sind.

Gemäß einer vorteilhaften Ausführungsform des Stegs weist jedes Rohrsegment des Stegs die gleiche Segmentbreite (w) auf. Gemäß einer vorteilhaften Ausführungsform des Stegs weist jedes Rohrsegment des Stegs die gleiche Segmenthöhe (h) auf. Insbesondere bei (ausrangierten) Massenprodukten als Halbstücke erleichtern diese Vorgaben die Bestimmung der Festigkeit des Stegs beziehungsweise der Sandwich-Platte, und unter Umständen das Fertigungsverfahren.

Gemäß einer weiteren Ausführungsform des Stegs ist die Segmenttiefe des wenigstens einen Rohrsegments geringer als die Segmentbreite des wenigstens einen Rohrsegments, wobei insbesondere das Verhältnis zwischen der Segmenttiefe und der Segmentbreite des wenigstens einen Rohrsegments weniger als 5 zu 1, insbesondere weniger als 2 zu 1, beträgt.

Gemäß einer weiteren Ausführungsform des Stegs ist die Stegtiefe gleich groß wie eine Segmenttiefe des zugehörigen Rohrsegments.

Gemäß einem zweiten Aspekt der Erfindung wird ein Sandwich-Block, aufweisend wenigstens zwei Stegschichten, die jeweils aus wenigstens einem Steg nach dem ersten Aspekt der Erfindung ausgebildet sind, zur Verfügung gestellt. Dabei sind die Stegschichten in Richtung der Segmenthöhe ihrer Stege gestapelt, wobei optional zwischen zwei benachbarten Stegschichten eine Blockplattenschicht angeordnet sein kann und wobei insbesondere die Rohrsegmente der Stege in Bezug auf ihre jeweilige Längserstreckungsrichtung parallel zueinander angeordnet sind.

Gemäß einer Ausführungsform weist der Sandwich-Block wenigstens eine erste Stegschicht, eine zweite Stegschicht und/ oder eine Blockplattenschicht auf. Dabei weist die erste Stegschicht wenigstens einen ersten Steg nach dem ersten Aspekt der Erfindung auf und die eine zweite Stegschicht weist wenigstens einen zweiten Steg nach dem ersten Aspekt der Erfindung auf. Die Blockplattenschicht ist aus einer Platte mit einer ersten Plattenseite ausgebildet. Der Sandwich-Block kann also entweder wenigstens eine erste Stegschicht und wenigstens eine zweite Stegschicht oder wenigstens eine erste Stegschicht und wenigstens eine Blockplattenschicht oder wenigstens eine erste Stegschicht und wenigstens eine zweite Stegschicht und wenigstens eine Blockplattenschicht aufweisen.

Gemäß einer Ausführungsform weist der Sandwich-Block eine Mehrzahl von direkt ohne dazwischenliegende Blockplattenschicht mechanisch miteinander verbundenen Stegschichten auf.

Gemäß einer weiteren Ausführungsform ist jede Stegschicht mit einer angrenzenden Blockplattenschicht verbunden, so dass der Sandwichblock aus jeweils abwechselnd gestapelt angeordneten Stegschichten und Blockplattenschichten ausgebildet ist.

Gemäß einer Ausführungsform des Sandwich-Blocks ist der wenigstens eine erste Steg der ersten Stegschicht mittels wenigstens einer Wandung, insbesondere mittels der jeweiligen Abflachung (falls vorhanden) der wenigstens einen Wandung, wenigstens eines seiner Rohrsegmente mit der Stegbasis der angrenzenden zweiten Stegschicht mechanisch verbunden.

Gemäß einer Ausführungsform des Sandwich-Blocks ist der wenigstens eine erste Steg der ersten Stegschicht mittels wenigstens einer Wandung, insbesondere mittels der jeweiligen Abflachung (falls vorhanden) der wenigstens einen Wandung, wenigstens eines seiner Rohrsegmente mit der ersten Plattenseite der angrenzenden Blockplattenschicht mechanisch verbunden.

Gemäß einer weiteren Ausführungsform ist der wenigstens eine erste Steg der ersten Stegschicht mittels wenigstens einer Wandung, insbesondere mittels der jeweiligen Abflachung (falls vorhanden) der wenigstens einen Wandung, wenigstens eines seiner Rohrsegmente mit einer Wandung des wenigstens einen Rohrsegments der angrenzenden zweiten Stegschicht mechanisch verbunden.

Gemäß einer Ausführungsform des Sandwich-Blocks ist der wenigstens eine erste Steg der ersten Stegschicht mittels seiner Stegbasis mit der Stegbasis der angrenzenden zweiten Stegschicht mechanisch verbunden.

Gemäß einer Ausführungsform des Sandwich-Blocks ist der wenigstens eine erste Steg der ersten Stegschicht mittels seiner Stegbasis mit der ersten Plattenseite der angrenzenden Blockplattenschicht mechanisch verbunden.

Gemäß einer Ausführungsform wird die erste Stegschicht aus genau einem ersten Steg gebildet. Gemäß einer weiteren Ausführungsform wird die zweite Stegschicht aus genau einem zweiten Steg gebildet. Gemäß einer weiteren Ausführungsform ist die erste Stegschicht genau von einem ersten Steg gebildet und die zweite Stegschicht ist von genau einem zweiten Steg gebildet.

Gemäß einer weiteren Ausführungsform ist die erste Stegschicht von einer Mehrzahl von ersten Stegen gebildet und/ oder die zweite Stegschicht ist von einer Mehrzahl von zweiten Stegen gebildet, wobei die ersten Stege und die zweiten Stege jeweils in Bezug auf ihre jeweilige Stegbasis parallel zueinander angeordnet sind.

Gemäß einer Ausführungsform des Sandwich-Blocks sind die erste Stegschicht und die zweite Stegschicht des Sandwich-Blocks derart zueinander angeordnet, dass die Rohrsegmente der ersten Stege in Bezug auf ihre Längserstreckungsrichtung parallel zueinander angeordnet sind. Dabei ist insbesondere die wenigstens eine Blockplattenschicht parallel zu der gemeinsamen Längserstreckungsrichtung der Rohrsegmente angeordnet.

Gemäß einer weiteren Ausführungsform weist der Sandwich-Block eine Blockplattenschicht auf, die den Sandwich-Block einseitig abschließt.

Gemäß einer weiteren Ausführungsform grenzt jede Stegschicht des Sandwich-Blocks an eine Blockplattenschicht an, insbesondere wobei die Stegschichten und Blockplattenschichten abwechselnd schichtweise angeordnet sind.

Gemäß einer weiteren Ausführungsform weist wenigstens ein Steg des Sandwich-Blocks, insbesondere jeder Steg des Sandwich-Blocks jeweils wenigstens zwei Rohrsegmente auf, wobei jedes Rohrsegment der wenigstens zwei Rohrsegmente des entsprechenden Stegs mit einer ersten Fläche der Stegbasis des entsprechenden Stegs verbunden ist. Dabei weist der Sandwich-Block insbesondere eine Mehrzahl von direkt ohne dazwischenliegende Blockplattenschicht mechanisch miteinander verbundenen Stegschichten auf.

Gemäß einer weiteren Ausführungsform weist jeder Steg des Sandwich-Blocks wenigstens ein erstes Rohrsegment und ein zweites Rohrsegment auf, wobei das erste Rohrsegment mit einer ersten Fläche der Stegbasis des entsprechenden Stegs verbunden ist, und wobei das zweite Rohrsegment mit einer der ersten Fläche gegenüberliegenden zweiten Fläche der Stegbasis des entsprechenden Stegs verbunden ist, insbesondere wobei entlang einer Stegbreite des entsprechenden Stegs die ersten Rohrsegmente und die zweiten Rohrsegmente abwechselnd an der Stegbasis des entsprechenden Stegs angeordnet sind. Dabei ist insbesondere jede Stegschicht mit einer angrenzenden Blockplattenschicht verbunden, so dass der Sandwichblock aus jeweils abwechselnd gestapelt angeordneten Stegschichten und Blockplattenschichten ausgebildet ist.

Gemäß einer weiteren Ausführungsform weist der Sandwich-Block wenigstens eine Deckplatte auf, welche parallel zu den Stegschichten und/ oder Blockplattenschichten ausgerichtet ist und den Sandwich-Block einseitig abschließt.

Gemäß einer weiteren Ausführungsform weist der Sandwich-Block wenigstens eine Randplatte auf, welche senkrecht zu den Stegschichten und/ oder Blockplattenschichten des Sandwich-Blocks ausgerichtet ist und den Sandwich-Block einseitig abschließt.

Eine Deckplatte bzw. Randplatte verleiht dem Sandwich-Block zusätzliche Stabilität. Insbesondere kann durch Zerteilen des Sandwich-Blocks in wenigstens eine Kernschicht einer Sandwich-Platte aus der Deckplatte wenigstens eine Deckleiste bzw. aus der Randplatte wenigstens eine Randleiste der Kernschicht erzeugt werden, wobei die Deckleiste bzw. Randleiste der Kernschicht zusätzliche Stabilität verleiht.

Gemäß einer weiteren Ausführungsform weist der Sandwich-Block wenigstens eine Stegschicht, insbesondere eine Stegschicht, auf, die jeweils aus wenigstens einem ersten Steg, insbesondere einem ersten Steg, und wenigstens einem zweiten Steg, insbesondere einem zweiten Steg, ausgebildet ist, wobei der erste und zweite Steg jeweils eine Mehrzahl von in Bezug auf ihre Längserstreckungsrichtung parallel angeordneter Rohrsegmente mit einer senkrecht zu der Segmenthöhe und der Längserstreckungsrichtung verlaufenden Segmentbreite aufweisen, wobei benachbarte Rohrsegmente senkrecht zu der gemeinsamen Längserstreckungsrichtung einen Abstand aufweisen, und wobei der Abstand dem ein- bis zweifachen der Segmentbreite, insbesondere genau der Segmentbreite, entspricht, und wobei die Rohrsegmente des wenigstens einen ersten Stegs und die Rohrsegmente des wenigstens einen zweiten Stegs in einer gemeinsamen Ebene angeordnet sind, wobei die gemeinsame Ebene parallel zu der Erstreckungsrichtung der Stegbasen des ersten Stegs und des zweiten Stegs verläuft, und wobei jedes Rohrsegment des ersten Stegs wenigstens ein benachbartes Rohrsegment des zweiten Stegs aufweist. Dies bedeutet mit anderen Worten, dass eine gemeinsame Stegschicht durch wechselseitig ineinandergreifende Rohrsegmente zweier Stege gebildet ist, die insbesondere in Bezug auf die Längserstreckungsrichtung der Rohrsegmente zueinander um 180° gedreht sind. Dabei sind insbesondere die Wandungen des einen Stegs mit der Stegbasis des jeweils anderen Stegs mechanisch verbunden.

Gemäß einem dritten Aspekt der Erfindung wird eine Kernschicht, insbesondere für eine erfindungsgemäße Sandwich-Platte, zur Verfügung gestellt.

Die Kernschicht ist aus wenigstens einem Steg nach dem ersten Aspekt der Erfindung gebildet, wobei das Verhältnis zwischen der Basishöhe und der Stegtiefe des Stegs zwischen 1:1 und 1:20, insbesondere zwischen 2:3 und 1:10, beträgt. Dabei sind die Rohrsegmente entlang ihrer Längserstreckungsrichtung in Richtung einer Schichtdicke der Kernschicht angeordnet.

In einer Ausführungsform der Kernschicht beträgt die Stegtiefe zwischen 1 mm und 150 mm, insbesondere zwischen 3 mm und 120 mm, vor allem zwischen 7 mm und 100 mm.

In einer weiteren Ausführungsform ist die Kernschicht aus einer Mehrzahl von Stegen ausgebildet, wobei insbesondere die Mehrzahl von Stegen in Richtung der Erstreckungsrichtung der Stegbasis parallel angeordnet sind.

In einer weiteren Ausführungsform sind die Stege der Kernschicht mechanisch miteinander verbunden.

In einer weiteren Ausführungsform der Kernschicht ist die Kernschicht durch Zerschneiden eines Sandwich-Blocks nach dem zweiten Aspekt der Erfindung, insbesondere quer zu der Längserstreckungsrichtung der Rohrsegmente, gebildet.

Gemäß einem vierten Aspekt der Erfindung wird eine Sandwich-Platte, insbesondere für den Rohbau oder Innenausbau oder als Teil einer Palette, zur Verfügung gestellt. Die Sandwich-Platte weist wenigstens eine Plattenschicht, insbesondere zwei Plattenschichten, und wenigstens eine Kernschicht, insbesondere nach dem dritten Aspekt der Erfindung, auf, wobei die wenigstens eine Plattenschicht jeweils aus einer Platte ausgebildet ist, wobei die Platte eine Verbindungsfläche aufweist, und wobei die wenigstens eine Kernschicht jeweils aus wenigstens einem Steg, insbesondere mehreren Stegen, nach dem ersten Aspekt der Erfindung ausgebildet ist, und wobei der wenigstens eine Steg jeweils mittels einer der Schnittflächen seines wenigstens einen Rohrsegments mit der Verbindungsfläche der Plattenschicht mechanisch verbunden ist.

Gemäß einer Ausführungsform ist der wenigstens eine Steg jeweils mittels einer der Schnittflächen seines wenigstens einen Rohrsegments mit der angrenzenden Verbindungsfläche der benachbarten Plattenschicht mechanisch verbunden.

Die Sandwich-Platte weist wenigstens eine Plattenschicht und wenigstens eine Kernschicht auf, wobei diese ein sich gegenseitig verstärkendes Verbundsystem bilden. Insbesondere setzt sich die Sandwich-Platte aus mindestens einer Plattenschicht und mindestens einer Kernschicht zusammen. Die (angrenzende) Verbindungsfläche ist dabei eine im Zusammenbau der Sandwich-Platte mit der Kernschicht in Kontakt stehende Oberfläche mit der Länge und Breite der Platte, welche die Kanten der Verbindungsfläche definieren. Insbesondere sind die Kernschicht und die Plattenschicht durch Verkleben mittels der Verbindungsfläche miteinander verbunden. Die Plattenschicht bildet dabei die zusammenhaltende Basis, mittels welcher bei einer Biegebelastung die resultierenden Zugkräfte und Druckkräfte aufnehmbar sind, und die Kernschicht bildet die Verstärkung beziehungsweise Aussteifung. Die Kernschicht ist hierbei mittels wenigstens eines Stegs gemäß der obigen Beschreibung gebildet, insbesondere mittels einer Vielzahl von Stegen, insbesondere mit jeweils einer Vielzahl von Rohrsegmenten. Insbesondere sind dabei mehrere Stege, insbesondere dicht an dicht, parallel angeordnet.

Für eine besonders hohe Festigkeit sind insbesondere Stege einer Kernschicht jeweils in Richtung der Segmentbreite (w), insbesondere um die Hälfte der Segmentbreite (w), zueinander versetzt. Die Stege lassen sich besonders einfach fertigen und zudem sind sie zum Auflegen auf der Plattenschicht besonders leicht zu handhaben, weil die Stegbasis die Rohrsegmente definiert und (ausreichend) stabil zusammenhält. Zudem sind die Stege mittels der Schnittflächen des zumindest einen Rohrsegments mit der Verbindungsfläche der Platte (leicht) verbindbar, welche bei vielen Materialien, insbesondere bei Bambus, besonders gut verklebbar ist.

Eine Plattenschicht ist in einer Ausführungsform aus einer Mehrzahl von Platten gebildet. Eine Kernschicht ist in einer Ausführungsform aus einer Mehrzahl von in Richtung der Segmenttiefe (d) übereinander gestapelter Stege gebildet.

Gemäß einer weiteren Ausführungsform weist die Sandwich-Platte wenigstens eine Plattenschicht und wenigstens eine Kernschicht auf, wobei die Plattenschicht eine Platte mit einer Verbindungsfläche umfasst, und wobei die Kernschicht wenigstens einen Steg nach dem ersten Aspekt der Erfindung umfasst, und wobei der wenigstens eine Steg mittels zumindest einer ersten Schnittfläche eines Rohrsegments mit der angrenzenden Verbindungsfläche der benachbarten Plattenschicht verbunden ist.

Gemäß einer Ausführungsform der Sandwich-Platte weist die Sandwich-Platte eine erste Plattenschicht und eine zweite Plattenschicht auf, welche wenigstens eine Kernschicht, insbesondere genau eine Kernschicht, beidseitig begrenzen, wobei die erste Plattenschicht mit der ersten Schnittfläche eines Stegs der Kernschicht verbunden ist und die zweite Plattenschicht mit der zweiten Schnittfläche eines Stegs der Kernschicht verbunden ist, wobei die beiden Plattenschichten insbesondere die Sandwich-Platte beidseitig abschließen. Z.B. ist zumindest eine Platte aus Bambus-Sperrholz gebildet.

Bei dieser Ausführungsform ist jede Kernschicht beidseitig mit einer Plattenschicht versehen. Hierdurch wird die Festigkeit der Sandwich-Platte erhöht. Bei einer Mehrzahl von Lagen in einer jeweiligen Kernschicht zwischen zwei Plattenschichten sind die erste Schnittfläche und die zweite Schnittfläche nicht an demselben Steg gebildet, weisen jedoch wie bei einer einzigen Lage voneinander weg. In einer Ausführungsform umfasst die Kernschicht nur eine einzige Lage von Stegen und weist eine Gesamttiefe auf, die der Segmenttiefe (d) beziehungsweise der Stegtiefe (D) plus technisch bedingte Abweichungen, zum Beispiel Fertigungstoleranzen, Dicke eines Klebemittels oder ähnliches, entspricht. Bei dieser Ausführungsform sind die Schnittflächen die ersten Schnittflächen und die zweiten Schnittflächen jeweils eines einzigen Stegs. Eine jeweilige Kernschicht ist von zwei äußeren Plattenschichten seitlich, also in Richtung der Plattentiefe beziehungsweise Segmenttiefe (d), begrenzt und insbesondere seitlich abgeschlossen, sodass die Sandwich-Platte in Richtung der Plattentiefe beziehungsweise Segmenttiefe (d) ebene und geschlossene Außenoberflächen bildet. Die Kernschicht ist somit auf die Seite der äußeren Plattenfläche schauend nicht sichtbar, sondern jeweils durch die Plattenschichten verdeckt. Insbesondere sind zudem die Kanten einer solchen Sandwich-Platte, also die Plattenseiten, welche senkrecht zur Ebene der Kernschicht ausgerichtet sind, ebenfalls geschlossen. Hierfür werden zum Beispiel bereits bei der Herstellung der Sandwich-Platte Abdeckrahmen eingeleimt. Alternativ werden, insbesondere für Zuschnittmaterial, wenigstens teilweise an offenen Kanten Furnierstreifen oder Kunststoffstreifen angeleimt und/ oder, mittels zum Beispiel Fräsen, eine Hohlkehle gebildet und eine Holzleiste nachträglich eingeleimt.

Zum Beispiel bei der Verwendung von Naturmaterialien oder durch fertigungsbedingte Toleranzen bei der Erzeugung der (Segment-) Tiefe der Stege in der Kernschicht zwischen zwei Plattenschichten sind die Toleranzen derart gering, dass sie durch zum Beispiel Klebevolumen ausgleichbar sind, sodass eine Wellung der benachbarten Plattenschicht und/oder eine Reduzierung der mechanischen Festigkeit ausgeschlossen oder zumindest vernachlässigbar vermindert wird.

Überraschend wurde festgestellt, dass eine solche Sandwich-Platte eine derart hohe Festigkeit, insbesondere Biegesteifigkeit, aufweist, dass konventionelle teurere und/ oder schwerere Platten zum Beispiel aus Aluminium oder Kunststoff hierdurch ersetzt werden können.

Gemäß einer weiteren Ausführungsform der Sandwich-Platte weist die Sandwich-Platte abwechselnd eine Plattenschicht und eine Kernschicht auf, wobei insbesondere die Kernschicht jeweils eine einzige Lage von Stegen aufweist, und wobei insbesondere die Stege in den Kernschichten verdreht zueinander angeordnet sind. Dabei sind die Stege in den Kernschichten insbesondere abwechselnd um 90° verdreht angeordnet.

In dieser Ausführungsform wechseln sich in Richtung der Segmenttiefe (d) eine erste Plattenschicht und eine Kernschicht jeweils ab, und bilden so eine Mehrfach-Sandwich-Platte. Bei einer solchen Mehrfach-Sandwich-Platte sind die Stege bezogen auf die Achse entlang der Segmenttiefe (d) insbesondere unterschiedlich ausgerichtet, besonders insbesondere abwechselnd oder in einer anderen Reihenfolge zu dieser Achse um jeweils 90° zueinander verdreht angeordnet. Insbesondere ist die Plattenschicht aus einer einzigen Platte gebildet und die Kernschicht aus einer einzigen Lage von wenigstens einem Steg gebildet. In einer anderen Ausführungsform mit einer Kernschicht mit mehreren Lagen von Stegen sind die Stege in der gebildeten Kernschicht-Ebene insbesondere unterschiedlich ausgerichtet. Dabei sind die Stege in der gebildeten Kernschicht-Ebene insbesondere abwechselnd oder in einer anderen Reihenfolge bezogen auf die Achse entlang der Segmenttiefe um jeweils 90° zueinander verdreht angeordnet.

Gemäß einer weiteren Ausführungsform weist wenigstens ein Rohrsegment des wenigstens einen Stegs an seiner Wandung eine Abflachung auf, insbesondere wobei die Schnittflächen des Rohrsegments durch eine Sekante eines die Wandung bildenden Kreisringabschnitts gebildet werden.

Gemäß einer weiteren Ausführungsform weist der wenigstens eine Steg wenigstens zwei Rohrsegmente auf, wobei jedes der wenigstens zwei Rohrsegmente mit einer ersten Fläche der Stegbasis verbunden ist.

Gemäß einer weiteren Ausführungsform weist wenigstens ein erstes Rohrsegment und ein zweites Rohrsegment auf, wobei das erste Rohrsegment mit einer ersten Fläche der Stegbasis verbunden ist, und wobei das zweite Rohrsegment mit einer der ersten Fläche gegenüberliegenden zweiten Fläche der Stegbasis verbunden ist, insbesondere wobei entlang einer Stegbreite die ersten Rohrsegmente und die zweiten Rohrsegmente abwechselnd an der Stegbasis angeordnet sind.

Gemäß einer weiteren Ausführungsform weist die Kernschicht der Sandwich-Platte wenigstens eine Deckleiste auf, wobei die Deckleiste parallel zu der wenigstens einen Stegbasis der Stege der Kernschicht angeordnet ist und wobei die Deckleiste die Kernschicht einseitig abschließt.

Gemäß einer weiteren Ausführungsform weist die Kernschicht der Sandwich-Platte wenigstens eine Randleiste auf, wobei die Randleiste senkrecht zu der wenigstens einen Stegbasis der Stege der Kernschicht angeordnet ist und wobei die Deckleiste die Kernschicht einseitig abschließt. Eine Deckleiste und/ oder Randleiste verleiht der Kernschicht zusätzliche Stabilität.

Gemäß einer weiteren Ausführungsform weist die Sandwich-Platte weiterhin wenigstens einen Fuß oder wenigstens eine Kufe auf, wobei der wenigstens eine Fuß oder die wenigstens eine Kufe mit der Sandwichplatte, insbesondere mit der wenigstens einen Plattenschicht mechanisch verbunden ist. Dabei ist die Sandwichplatte insbesondere ein Teil einer Palette, z.B. zum Transport von Waren. Solch eine Palette weist mit der Sandwich-Platte mechanisch verbundene Füße oder Kufen zum Aufstellen der Palette auf. Mittels Kufen lässt sich die Palette vorteilhafterweise über den Boden, Transportbahnen und Rollengänge transportieren, insbesondere ziehen, schieben, rollen oder fahren. Insbesondere weist die wenigstens eine Kufe jeweils wenigstens einen Klotz auf, wobei die wenigstens eine Kufe mittels des wenigstens einen Klotzes mit der Sandwich-Platte mechanisch verbunden ist.

Gemäß einer weiteren Ausführungsform weist die Sandwich-Platte wenigstens eine Kufe auf, die ein Bodenbrett und wenigstens einen mit dem Bodenbrett mechanisch verbundenen Klotz aufweist, wobei der wenigstens eine Klotz eine erste Deckplatte, eine zweite Deckplatte und eine zwischen der ersten Deckplatte und der zweiten Deckplatte angeordnete Kernschicht aufweist, wobei die Kernschicht wenigstens eine erste Teilschicht und wenigstens eine zweite Teilschicht aufweist, die jeweils aus einer Mehrzahl von parallel in einer Reihe angeordneten Rohrsegmenten gebildet sind, wobei die Rohrsegmente jeweils eine Wandung und zwei Schnittenden aufweisen, welche die Rohrsegmente in Umfangsrichtung begrenzen, wobei insbesondere die Rohrsegmente der ersten Teilschicht mittels ihrer Schnittenden mit der ersten Deckplatte mechanisch verbunden sind, und wobei die Rohrsegmente der zweiten Teilschicht mittels ihrer Schnittenden mit der zweiten Deckplatte mechanisch verbunden sind. Hierbei ist die Sandwich-Platte Teil einer Palette.

Gemäß einem fünften Aspekt der Erfindung wird ein Verfahren zur Herstellung eines Stegs, insbesondere nach dem ersten Aspekt der Erfindung, vorgeschlagen, wobei das Verfahren wenigstens die folgenden Schritte aufweist: Bereitstellen einer Basisplatte aufweisend eine Fügefläche und Bereitstellen wenigstens eines Rohrsegments, insbesondere mehrerer Rohrsegmente, aufweisend jeweils zwei Schnittenden, die eine Wandung des entsprechenden Rohrsegments in Umfangsrichtung begrenzen; und Anordnen des wenigstens einen Rohrsegments auf der Fügefläche und mechanisches Verbinden jeweils wenigstens eines der Schnittenden, insbesondere jeweils beider Schnittenden, des wenigstens einen Rohrsegments mit der Fügefläche der Basisplatte, wobei die Basisplatte die Stegbasis des Stegs bildet.

Gemäß einer Ausführungsform des Verfahrens zur Herstellung eines Stegs wird das wenigstens eine Rohrsegment durch die folgenden Schritte hergestellt: Bereitstellen wenigstens eines Rohres; Zerteilen des wenigstens einen Rohres, insbesondere parallel zur Längserstreckung des Rohres, in eine Mehrzahl von Segmentstangen, wobei die Schnittenden des späteren Rohrsegments an jeder Segmentstange, insbesondere mittels des Zerteilens, gebildet werden; Bilden eines Zwischenprodukts durch Anordnen und Verbinden der wenigstens einen Segmentstange mit den Schnittenden auf einer Fügefläche der Basisplatte; Zerteilen des Zwischenprodukts quer zur Längserstreckung der wenigstens einen Segmentstange in mehrere Scheiben, sodass eine jeweilige Scheibe einen Steg bildet, wobei die Basisplatte die Stegbasis und jeweils eine der Segmentstangen ein Rohrsegment bildet.

Gemäß einer weiteren Ausführungsform weist das Verfahren zumindest die folgenden Schritte auf: Bereitstellen zumindest eines Rohres und einer Basisplatte, Zerteilen des zumindest einen Rohres in eine Mehrzahl von Segmentstangen mit jeweils einer Längenerstreckung, wobei die Segmentstangen jeweils eine quer zur Längenerstreckung gewölbte Wandung aufweisen, wobei die Schnittenden des späteren Rohrsegments an jeder Segmentstange, insbesondere mittels des Zerteilens, gebildet werden, Bilden eines Zwischenprodukts durch Anordnen und Verbinden der mindestens einen Segmentstange mit den Schnittenden auf einer Fügefläche der Basisplatte, Zerteilen des Zwischenprodukts quer zur Längenerstreckung der mindestens einen Segmentstange in mehrere Scheiben, sodass eine jeweilige Scheibe einen Steg bildet, wobei die Basisplatte die Stegbasis und jeweils eine der Segmentstangen ein Rohrsegment bildet.

Gemäß einer weiteren Ausführungsform des Verfahrens werden die Segmentstangen mittels einer Auftrennsäge aus einem Rohr hergestellt. Es sei an dieser Stelle darauf hingewiesen, dass das Rohr insbesondere einen Vollkreis bildet, aber auch einen Teilkreis bilden kann, welcher sich über mehr als 180° erstreckt.

Gemäß einer weiteren Ausführungsform des Verfahrens wird vor dem Anordnen der Segmentstangen auf der Fügefläche der Basisplatte zunächst die Fügeflächen mittels einer Leimauftragsmaschine beleimt und anschließend die Segmentstangen mittels einer Legestation aufgebracht. Die Fügefläche ist dabei eine Oberfläche, welche durch die Kanten (Länge und Breite) der Basisplatte definiert ist.

Gemäß einer weiteren Ausführungsform werden zur Herstellung des Stegs, also der mit der Stegbasis verbundenen Rohrsegmente gemäß der obigen Beschreibung, eine Streifensäge, auch als Mehrblattsäge bezeichnet, eingesetzt. Insbesondere ist keine Nachbearbeitung zum Erzeugen einer ausreichend geringen Toleranz der Segmenttiefe (d) und Stegtiefe (D) notwendig.

Die hierbei eingesetzten Maschinen sind Maschinen des Stands der Technik und bei vielen Fertigungsunternehmen für Plattenmaterial bereits vorhanden. Somit können die Stege ohne größere Investitionen und insbesondere ohne Entwicklung einer Spezialmaschine gefertigt werden, und somit bereits mit Beginn der Fertigung mit den konkurrierenden Plattenprodukten in Hinsicht auf die Kosten mithalten.

Gemäß einer weiteren Ausführungsform des Verfahrens zur Herstellung eines Stegs wird das Rohr durch Pressen von Holzmasse in einen entsprechend geformten Pressformkanal und Aushärten der Holzmasse erzeugt. Dabei kann reine Holzmasse oder Holzmasse mit einem zusätzlichen Bindemittel verwendet werden.

Gemäß einer weiteren Ausführungsform des Verfahrens zur Herstellung eines Stegs wird das wenigstens eine Rohrsegment durch Verpressen einer Holzmasse, insbesondere in einem Pressformkanal mit einer rohrsegmentförmigen Aussparung oder durch ein Flachpresswerkzeug mit einer geeigneten Kontur und Aushärten der Holzmasse hergestellt. Dabei kann reine Holzmasse oder Holzmasse mit einem zusätzlichen Bindemittel verwendet werden.

Gemäß einer weiteren Ausführungsform des Verfahrens zur Herstellung eines Stegs wird das Rohrsegment oder die Segmentstange mittels wenigstens der folgenden Schritte hergestellt: Bereitstellen eines Bretts, insbesondere einer HDF-Platte, Erzeugen einer Mehrzahl von Leisten durch Einbringen, insbesondere Ausfräsen, einer Mehrzahl von Gehrungen, wobei insbesondere die Leisten mittels der Gehrungen nicht vollständig voneinander getrennt werden; Bilden eines Rohrsegments oder einer Segmentstange aus den Leisten, wobei die Leisten insbesondere miteinander verleimt werden. Eine unvollständige Trennung der Leisten bei der Einbringung der Gehrungen hat den Vorteil, dass aus den zusammenhängenden Leisten einfacher ein Rohr gebildet werden kann als aus getrennten Leisten. Zudem bilden die Gehrungen bei dieser Ausgestaltung des Verfahrens Vertiefungen zur Aufnahme von Leim, was das Zusammenfügen des Rohrs vereinfacht.

Insbesondere weist das gebildete Rohrsegment bzw. die Segmentstange einen eckigen Querschnitt, insbesondere einen U-förmigen, trapezsegmentförmigen oder achtecksegmentförmigen Querschnitt, auf, wobei jeweils eine Kante des eckigen Querschnitts von einer Leiste gebildet wird. Insbesondere weist das gebildete Rohrsegment bzw. die Segmentstange eine Abflachung auf, wobei die Abflachung durch eine Leiste gebildet wird. Mittels eines derartigen Verfahrens lassen sich kostengünstig und einfach Rohrsegmente bzw. Segmentstangen herstellen.

Gemäß einem sechsten Aspekt der Erfindung wird ein Verfahren zur Herstellung eines Sandwich-Blocks, insbesondere nach dem zweiten Aspekt der Erfindung, zur Verfügung gestellt, wobei wenigstens zwei Stegschichten, die jeweils aus wenigstens einem Steg nach dem ersten Aspekt der Erfindung ausgebildet sind, in Richtung der Steghöhen ihrer Stege gestapelt werden, wobei die Stegschichten mechanisch miteinander verbunden werden, und wobei optional zwischen zwei benachbarten Stegschichten eine Blockplattenschicht angeordnet wird.

Gemäß einer Ausführungsform weist das Verfahren wenigstens die folgenden Schritte auf: Bilden einer ersten Stegschicht aus wenigstens einem ersten Steg nach dem ersten Aspekt der Erfindung, Anordnen einer zweiten Stegschicht aus wenigstens einem zweiten Steg oder einer Blockplattenschicht aus einer Platte auf der ersten Stegschicht, wobei die Blockplattenschicht eine erste Plattenseite aufweist; Verbinden, insbesondere Verleimen, der ersten Stegschicht mit der zweiten Stegschicht oder Verbinden, insbesondere Verleimen, der ersten Stegschicht mit der Blockplattenschicht, wobei der wenigstens eine erste Steg der ersten Stegschicht mittels seiner Wandung, insbesondere mittels der jeweiligen Abflachung der jeweiligen Wandung, mit einer Stegbasis eines zweiten Stegs der angrenzenden zweiten Stegschicht oder mit der ersten Plattenseite der angrenzenden Blockplattenschicht verbunden wird. Insbesondere können die Stegschichten und Blockplattenschichten mittels einer Legestation gestapelt und/ oder mittels einer Leimauftragsmaschine miteinander verbunden werden.

Gemäß einer Ausführungsform wird jeweils vor dem Verbinden einer zweiten Stegschicht mit einer ersten Stegschicht oder einer Blockplattenschicht mit einer ersten Stegschicht an einer Mehrzahl von Wandungen der Rohrsegmente des wenigstens einen ersten Stegs der ersten Stegschicht eine Mehrzahl von Abflachungen erzeugt.

Gemäß einem siebten Aspekt der Erfindung wird ein Verfahren zur Herstellung einer Sandwich-Platte nach dem vierten Aspekt der Erfindung zur Verfügung gestellt, wobei das Verfahren wenigstens die folgenden Schritte aufweist: Bereitstellen eines Sandwich-Blocks nach dem zweiten Aspekt der Erfindung, wobei die Stegschichten des Sandwich-Blocks derart angeordnet sind, dass die Rohrsegmente der ersten Stege und der zweiten Stege in Bezug auf ihre Längserstreckungsrichtung parallel zueinander angeordnet sind; Erzeugen wenigstens einer Kernschicht durch Zerteilen des Sandwich-Blocks, insbesondere quer zu der Längserstreckungsrichtung der Rohrsegmente, wobei eine Vielzahl von Schnittflächen der Rohrsegmente gebildet wird; Anordnen der Kernschicht auf einer ersten Verbindungsfläche einer ersten Plattenschicht und Verbinden der Kernschicht mit der ersten Verbindungsfläche, wobei die Rohrsegmente der Kernschicht mittels ihrer ersten Schnittflächen mit der Verbindungsfläche der ersten Plattenschicht verbunden werden; und insbesondere Anordnen wenigstens einer zweiten Verbindungsfläche einer zweiten Plattenschicht auf der Kernschicht und Verbinden der zweiten Verbindungsfläche mit der Kernschicht mittels der zweiten Schnittflächen der Rohrsegmente der Kernschicht.

Gemäß einer Ausführungsform des Verfahrens wird die wenigstens eine Kernschicht durch Zerteilen des Sandwich-Blocks quer zu der Richtung der Längserstreckung der Rohrsegmente gebildet. Das Zerteilen des Sandwich-Blocks zur Erzeugung der wenigstens einen Kernschicht kann beispielsweise mittels einer Streifensäge durchgeführt werden. Das Anordnen der Kernschicht mit der Plattenschicht kann beispielsweise wie oben dargestellt mittels einer Legestation durchgeführt werden und das Verbinden der Kernschicht mit der Plattenschicht kann wie oben dargestellt mittels einer Leimauftragsmaschine durchgeführt werden.

Mittels des beschriebenen Verfahrens kann eine Vielzahl von Kernschichten durch Zerteilen eines Sandwich-Blocks einfach, schnell und kostengünstig erzeugt werden. Dabei entfällt das Anordnen einzelner Stege auf einer Platte zur Bildung einer Kernschicht, was eine Beschleunigung und Kostensenkung des Verfahrens bedingt.

Gemäß einem achten Aspekt der Erfindung wird ein weiteres Verfahren zur Herstellung einer Sandwich-Platte, insbesondere nach dem vierten Aspekt der Erfindung, zur Verfügung gestellt, wobei das Verfahren wenigstens die folgenden Schritte aufweist:
Bereitstellen einer ersten Plattenschicht, die jeweils aus einer Platte ausgebildet ist, die eine Verbindungsfläche aufweist; Bereitstellen einer Kernschicht, insbesondere nach dem dritten Aspekt der Erfindung, aus wenigstens einem Steg nach dem ersten Aspekt der Erfindung, insbesondere aus mehreren Stegen, durch Anordnen des wenigstens einen Stegs auf der Verbindungsfläche, so dass jeweils eine der Schnittflächen des wenigstens einen Rohrsegments des wenigstens einen Stegs an der ersten Verbindungsfläche anliegt und mechanisches Verbinden der wenigstens einen ersten Schnittfläche mit der Verbindungsfläche, wobei insbesondere der wenigstens eine Steg durch Zerteilen eines Sandwich-Blocks nach dem zweiten Aspekt der Erfindung bereitgestellt wird, wobei mittels des Zerteilens des Sandwich-Blocks wenigstens eine der Schnittflächen gebildet wird; optional Bereitstellen einer zweiten Plattenschicht, die aus einer Platte mit einer zweiten Verbindungsfläche ausgebildet ist, Anordnen der zweiten Plattenschicht auf der Kernschicht so dass jeweils eine der Schnittflächen des wenigstens einen Rohrsegments des wenigstens einen Stegs an der zweiten Verbindungsfläche anliegt und mechanisches Verbinden der wenigstens einen Schnittfläche mit der zweiten Verbindungsfläche.

Gemäß einer Ausführungsform weist das Verfahren wenigstens die folgenden Schritte auf: Anordnen und Verbinden wenigstens eines Stegs nach einer Ausführungsform gemäß der obigen Beschreibung, welcher insbesondere wie vorhergehend beschrieben hergestellt ist, mit der ersten Schnittfläche des wenigstens einen Rohrsegments auf einer ersten Verbindungsfläche einer ersten Platte; insbesondere Anordnen und Verbinden einer zweiten Verbindungsfläche einer zweiten Platte auf der gegenüberliegenden zweiten Schnittfläche des, insbesondere gleichen, wenigstens einen Rohrsegments des wenigstens einen Stegs.

Um die Anforderungen des Marktes zu erfüllen, müssen Fertigungszeiten von etwa einer Minute pro Standardplattenmaß, zum Beispiel 2500 mm x 1250 mm, erreicht werden. Das hier vorgeschlagene Fertigungsverfahren bietet dafür erstmals eine Lösung an. Hierbei werden Bambusrohre der Länge nach in Kreissegmente zerteilt und auf eine Grundplatte, zum Beispiel eine Bambus-Sperrholzplatte, parallel nebeneinander aufgeklebt. Mechanisch weisen diese Sandwich-Platten eine enorme Festigkeit bei geringem Gewicht auf. Insbesondere wird eine sehr hohe Biegesteifigkeit durch das Material der Grundplatte der Stege erreicht, die deutlich über den bisher vorgeschlagenen Sandwich-Platten mit Bambus-Rohmaterial liegt. Es sind sogar mechanische Eigenschaften erzielbar, die mit ökologisch und preislich nachteiligen Aluminiumplatten oder Kunststoffplatten konkurrieren können.

Auch hierfür lassen sich entsprechend eine Leimauftragsmaschine und eine Legestation einsetzen. Somit können die Sandwich-Platten ohne größere Investitionen und insbesondere ohne Entwicklung einer Spezialmaschine gefertigt werden, und somit bereits mit Beginn der Fertigung mit den konkurrierenden Plattenprodukten in Hinsicht auf die Kosten mithalten.

Gemäß einer weiteren Ausführungsform wird jede Schnittfläche eines jeweiligen Stegs der Sandwich-Platte mit einer benachbarten Fläche, also mit wenigstens einer Verbindungsfläche einer Plattenschicht oder (bei mehreren Lagen in einer einzigen Kernschicht) mit wenigstens einer Schnittfläche verbunden, insbesondere verklebt, zum Beispiel mittels Beleimen und anschließendem Auflegen.

Insbesondere wird hierbei eine besonders hohe Festigkeit dadurch erreicht, dass bei einem Verkleben der einzelnen Elemente jeweils besonders klebefähige Flächen, zum Beispiel Schnittflächen, genutzt werden.

Gemäß einer Ausführungsform des Verfahrens zur Herstellung einer Sandwich-Platte wird in einem weiteren Schritt wenigstens ein Steg, mit der ersten Schnittfläche des wenigstens einen Rohrsegments auf einer dritten Verbindungsfläche der zweiten Plattenschicht zum Bilden einer weiteren Kernsicht angeordnet und verbunden. Insbesondere wird weiterhin wenigstens eine vierte Verbindungsfläche einer dritten Plattenschicht auf der gegenüberliegenden zweiten Schnittfläche des wenigstens einen Rohrsegments des wenigstens einen Stegs angeordnet und verbunden, wobei insbesondere wenigstens eine weitere Plattenschicht und/ oder wenigstens eine weitere Kernschicht gebildet werden.

Gemäß einer weiteren Ausführungsform des Verfahrens ist der Steg nach einer Ausführungsform gemäß der obigen Beschreibung, welcher insbesondere wie vorhergehend beschrieben hergestellt ist.

Hierbei wird eine Mehrfach-Sandwich-Platte hergestellt. Die einzelnen Schichten werden insbesondere nacheinander wie die Schichten einer Einfach-Sandwich-Platte gefügt und/ oder mehrere parallel erzeugte Einfach-Sandwich-Platten miteinander verbunden.

Die oben beschriebene Erfindung wird nachfolgend vor dem betreffenden technischen Hintergrund unter Bezugnahme auf die zugehörigen Zeichnungen, die weitere Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Segmentstange bzw. ein Rohrsegment;
- Fig. 2:: ein Steg bzw. ein Zwischenprodukt in einer perspektivischen Ansicht;
- Fig. 3:: ein Steg in räumlicher Draufsicht;
- Fig. 4:: ein Steg in einer perspektivischen Ansicht;
- Fig. 5:: eine Einfach-Sandwich-Platte;
- Fig. 6:: eine Mehrfach-Sandwich-Platte;
- Fig. 7:: eine Segmentstange bzw. ein Rohrsegment mit einer Abflachung;
- Fig. 8:: eine erste Ausgestaltung eines Stegs bzw. Zwischenprodukts;
- Fig. 9:: eine zweite Ausgestaltung eines Stegs bzw. Zwischenprodukts;
- Fig. 10:: eine perspektivische Ansicht einer ersten Ausgestaltung eines Sandwich-Blocks;
- Fig. 11:: einen Teilschnitt eines Sandwich-Blocks gemäß der ersten Ausgestaltung;
- Fig. 12:: eine perspektivische Ansicht einer zweiten Ausgestaltung eines Sandwich-Blocks;
- Fig. 13:: einen Teilschnitt eines Sandwich-Blocks gemäß der zweiten Ausgestaltung;
- Fig. 14,15:: eine Kernschicht einer Sandwich-Platte gemäß einer ersten Ausgestaltung;
- Fig. 16,17:: eine Kernschicht einer Sandwich-Platte gemäß einer zweiten Ausgestaltung;
- Fig. 18:: eine Segmentstange bzw. ein Rohrsegment mit einem U-förmigen Profil;
- Fig. 19:: eine Segmentstange bzw. ein Rohrsegment mit einem trapezsegmentförmigen Profil;
- Fig. 20:: eine Segmentstange bzw. ein Rohrsegment mit einem achtecksegmentförmigen Profil;
- Fig. 21:: eine schematische Darstellung eines Herstellungsverfahrens für eine Segmentstange bzw. ein Rohrsegment mit U-förmigem Profil;
- Fig. 22:: eine schematische Darstellung eines Herstellungsverfahrens für eine Segmentstange bzw. ein Rohrsegment mit einem trapezsegmentförmigen Profil;
- Fig. 23:: eine schematische Darstellung eines Herstellungsverfahrens für eine Segmentstange bzw. ein Rohrsegment mit einem achtecksegmentförmigen Profil;
- Fig. 24:: eine schematische Darstellung eines Sandwich-Blocks in einer weiteren Ausführungsform mit verbundenen Wandungen der Rohrsegmente;
- Fig. 25:: eine schematische Darstellung eines Sandwich-Blocks mit einer Schicht die aus ineinandergreifenden Rohrsegmenten zweier Stege gebildet ist.

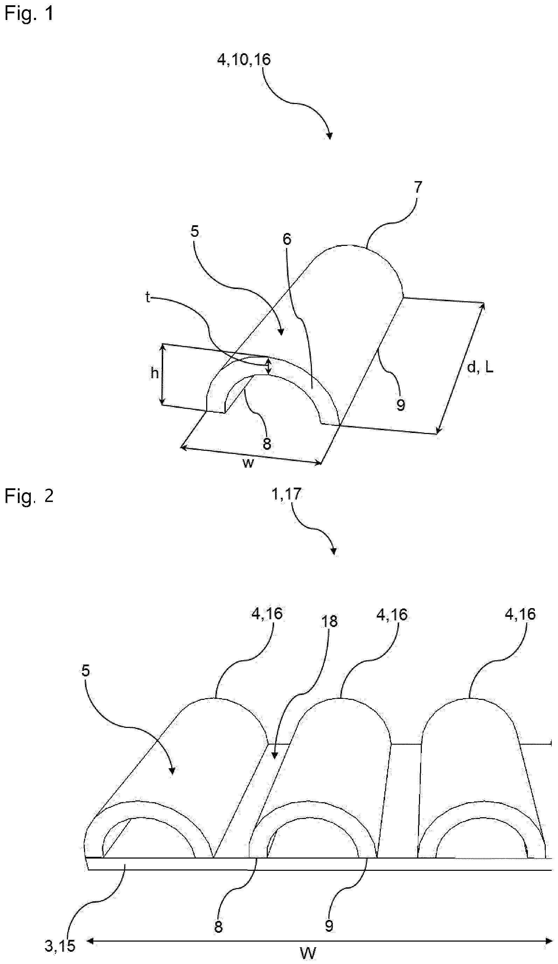

Die Fig. 1 zeigt schematisch eine Segmentstange 16 bzw. ein Rohrsegment 4, welche bzw. welches insbesondere aus einem Rohr 10, z.B. aus einem Holzwerkstoff, gebildet ist. Insbesondere ist die Segmentstange 16 aus einem Rohr 10 mit einer Stangenlänge L, zum Beispiel einem Bambusrohr gebildet.

Die Segmentstange 16 bzw. das Rohrsegment 4 weist eine Wandung 5 mit einem hier halbkreisförmigen Querschnitt auf, wobei die Stärke t der Wandung 5 deutlich geringer ist als die Segmenthöhe h. Insbesondere ist die Wandung 5 gewölbt.

Der Querschnitt beziehungsweise die Wandung 5 endet in Umfangsrichtung in einem ersten Schnittende 8 und einem zweiten Schnittende 9. Die Umfangsrichtung wird auch als Wandungsrichtung bezeichnet.

Die Schnittenden 8 und 9 werden insbesondere direkt beim Zerteilen eines Rohres, erzeugt. Z.B. werden die Schnittenden 8 und 9 direkt beim Zerteilen eines BambusRohres erzeugt. Sofern zum Beispiel Bambusrohr verwendet wird, sind die Außenseite und Innenseite der Wandung 5 sehr glatt und schlecht verklebbar, während die Schnittenden 8 und 9 gut verklebbares Material freilegen.

Die Segmentbreite w ist der maximale Abstand zwischen den Schnittenden, der hier in diesem Beispiel parallel zu den Schnittenden 8 und 9 ausgerichtet ist. Bei einem idealen Halbkreis entspricht die Segmentbreite w also der Summe aus dem Zweifachen der Stärke t der Wandung 5 und dem Zweifachen des Innenradius. Die Segmenthöhe h ist der maximale Abstand zwischen einer gedachten Verbindungslinie zwischen den, beziehungsweise eine Auflegeebene der, Schnittenden 8 und 9 und der maximalen Erhebung der Außenfläche der Wandung 5, also in diesem Beispiel senkrecht zur Segmentbreite w und zur Segmenttiefe d Insbesondere verläuft die Segmenthöhe h senkrecht zur Segmentbreite w und zur Stangenlänge L. Die Segmenttiefe d ist parallel zu den Schnittenden entlang, insbesondere parallel zu, der Wandung 5 ausgerichtet. Das Rohrsegment 4 ist in Längserstreckungsrichtung von den Schnittflächen 6,7 begrenzt.

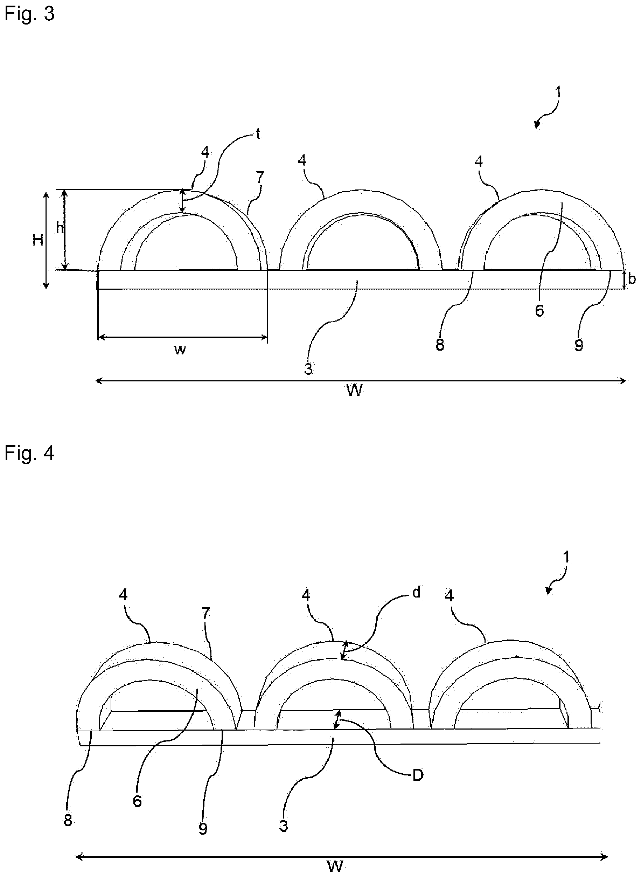

Insbesondere bei Verwendung von Bambusrohren ist die Stangenlänge L möglichst lang, sodass möglichst viele Rohrsegmente 4 (vgl. Fig. 3 und Fig. 4) aus einer Segmentstange 16 erzeugt werden können. Dieses Maß ist vor allem von dem Rohmaterial und/oder den Maschinenanforderungen abhängig.

In Fig. 2 ist ein Ausschnitt eines Stegs 1 bzw. eines Zwischenprodukts 17 mit einer Stegbreite W dargestellt, bei welchem mehrere Segmentstangen 16 des Zwischenprodukts, bzw. mehrere Rohrsegmente 4 des Stegs 1 mit ihren Schnittenden 8,9 auf die Fügefläche 18 der Basisplatte 15 bzw. der Stegbasis 3 aufgelegt sind, wobei die Fügefläche 18 insbesondere zuvor beleimt worden ist. Die Segmentstangen 16 bzw. Rohrsegmente 4 sind hierbei insbesondere wie in Fig. 1 ausgeführt und insbesondere gleich dimensioniert. Der Abstand zwischen den einzelnen Segmentstangen 16 ist hierbei fertigungsbedingt und/ oder gemäß den mechanischen Anforderungen festzulegen. Die Basisplatte 15 ist hier insbesondere aus einer einzigen Platte gebildet. Z.B. ist die Basisplatte 15 aus Bambus-Sperrholz gebildet.

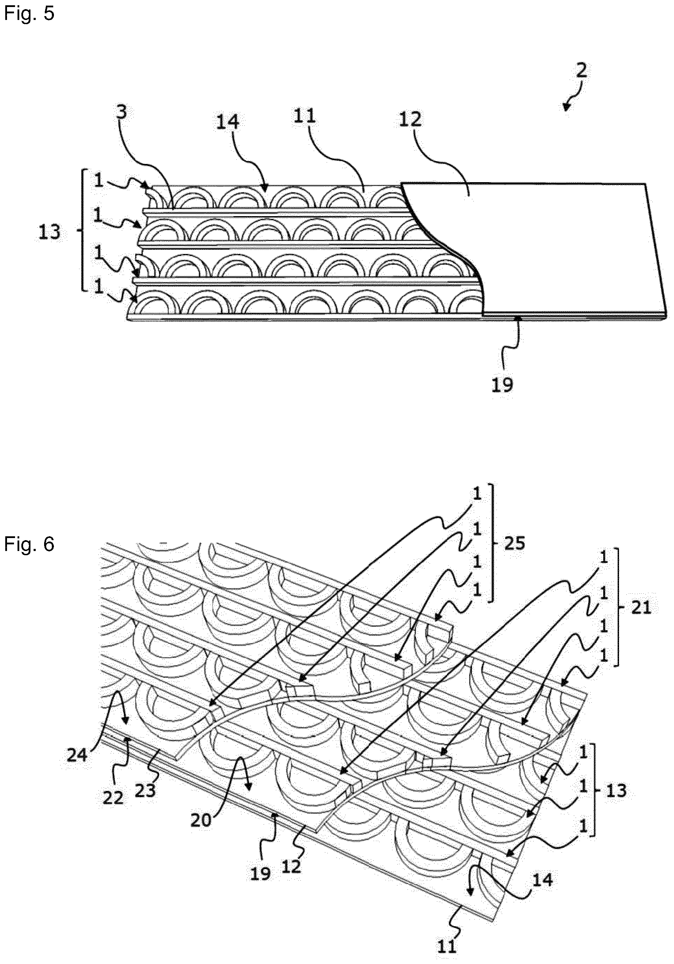

Fig. 3 zeigt einen Steg 1 mit einer Stegbreite W und einer Steghöhe H in räumlicher Draufsicht und Fig. 4 denselben Steg 1 in perspektivischer Ansicht. Hierbei ist die (vordere) erste Schnittfläche 6 zu sehen und die (hintere) zweite Schnittfläche 7 verdeckt, welche im Abstand von der Segmenttiefe d und der Stegtiefe D zueinander die Längserstreckung des Rohrsegments 4 begrenzen. Der Steg weist eine Stegbasis 3 mit einer Basishöhe b auf. Insbesondere ist der Steg mittels einer Streifensäge aus dem Zwischenprodukt 17, wie es zum Beispiel in Fig. 2 gezeigt ist, gebildet. Dann ist die Stegbasis 3 aus der Basisplatte 15 und das jeweilige Rohrsegment 4 aus je einer der nebeneinander angeordneten Segmentstangen 16 gebildet. Dieses Verfahren ist nicht nur kostengünstig und erlaubt eine schnelle und sichere Verarbeitung, sondern ermöglicht zugleich, dass der Steg 1 insgesamt eine gleiche Tiefe (vergleiche Fig. 4) sowohl bei den Rohrsegmenten 4 (Segmenttiefe d) als auch bei der Stegbasis 3 (Stegtiefe D) aufweist. Dadurch sind eine besonders hohe mechanische Festigkeit einer Sandwich-Platte 2 und/ oder eine besonders ebene Oberfläche bei zwei Plattenschichten 11 und 12 (vergleiche Fig. 5) erzielbar.

Fig. 5 zeigt eine (Einfach-) Sandwich-Platte 2 mit einer ersten Plattenschicht 11 und einer zweiten Plattenschicht 12, welche geschnitten dargestellt ist, sodass die dazwischen angeordnete Kernschicht 13 ausschnittsweise sichtbar ist. Die Kernschicht 13 ist hierbei allein aus mehreren Stegen 1 gleicher Stegtiefe D gebildet. Die Stege 1 sind insbesondere wenigstens teilweise wie zum Beispiel in Fig. 3 und Fig. 4 detailliert dargestellt und vorhergehend beschrieben aufgebaut. Die Kernschicht 13 ist in diesem Beispiel einlagig gebildet. Die Stege 1 sind jeweils mit ihren Schnittflächen 6 beziehungsweise 7 mit den jeweiligen Verbindungsflächen 14 (hier nur von der ersten Plattenschicht 11 bezeichnet) verbunden. Insbesondere werden die Stege 1 auf eine zuvor beleimte (erste) Verbindungsfläche 14 der ersten Plattenschicht 11 aufgelegt und anschließend die ebenfalls zuvor beleimte (zweite) Verbindungsfläche 19 der zweiten Plattenschicht 12 aufgelegt. Die Plattenschichten 11 und 12 sind hierbei insbesondere aus einer einzigen Platte gebildet. Die Platte ist zum Beispiel aus Bambus-Sperrholz gebildet.

Fig. 6 zeigt eine (Mehrfach-) Sandwich-Platte 2 mit einer ersten Plattenschicht 11, einer zweiten Plattenschicht 12 und einer dritten Plattenschicht 23, sowie mit einer ersten Kernschicht 13, einer zweiten Kernschicht 21 und einer dritten Kernschicht 25. Hierbei sind die Kernschichten 13, 21 und 25 mit zueinander parallelen Stegen 1 aufgebaut und jeweils in Richtung der Segmentbreite w (vergleiche Fig. 3) jeweils um die Hälfte der Segmentbreite w versetzt zueinander angeordnet und ansonsten gleich ausgerichtet. Die einander entgegengesetzt ausgerichteten Schnittflächen 6 und 7 (vergleiche Fig. 3) der Stege 1 sind jeweils mit der benachbarten Verbindungsfläche verbunden, insbesondere verklebt, also von der ersten Kernschicht 13 mit der ersten Verbindungsfläche 14 der ersten Plattenschicht 11 und mit der zweiten Verbindungsfläche 19 der zweiten Plattenschicht 12, von der zweiten Kernschicht 21 mit der dritten Verbindungsfläche 20 der zweiten Plattenschicht 12 und mit der vierten Verbindungsfläche 22 der dritten Plattenschicht 23, sowie von der dritten Kernschicht 25 mit der fünften Verbindungsfläche 24 der dritten Plattenschicht 23. Insbesondere ist weiterhin eine abschließende Plattenschicht (wie in Fig. 5 bei der Einfach-Sandwich-Platte 2) auf der dritten Kernschicht 25 angeordnet und befestigt. Die Anzahl der Kernschichten ist bezogen auf die Anwendung mechanisch auszulegen und nicht auf genau drei beschränkt. Weiterhin ist die Ausrichtung der Stege 1 in den Kernschichten nach Anwendungszweck der Sandwich-Platte 2 mechanisch oder thermisch (Isolation) auszulegen. Weiterhin sind für einen Anwendungsfall in einer einzelnen, mehreren oder allen Kernschichten mehrere Lagen von Stegen, insbesondere um eine Achse parallel zur Segmenttiefe d (vergleiche Fig. 4) zueinander verdreht, angeordnet.

Mit der hier dargestellten Erfindung können die preislichen Anforderungen des Marktes für Plattenmaterial durch geringe Fertigungszeiten erfüllt werden und zugleich nachhaltiges Material eingesetzt werden.

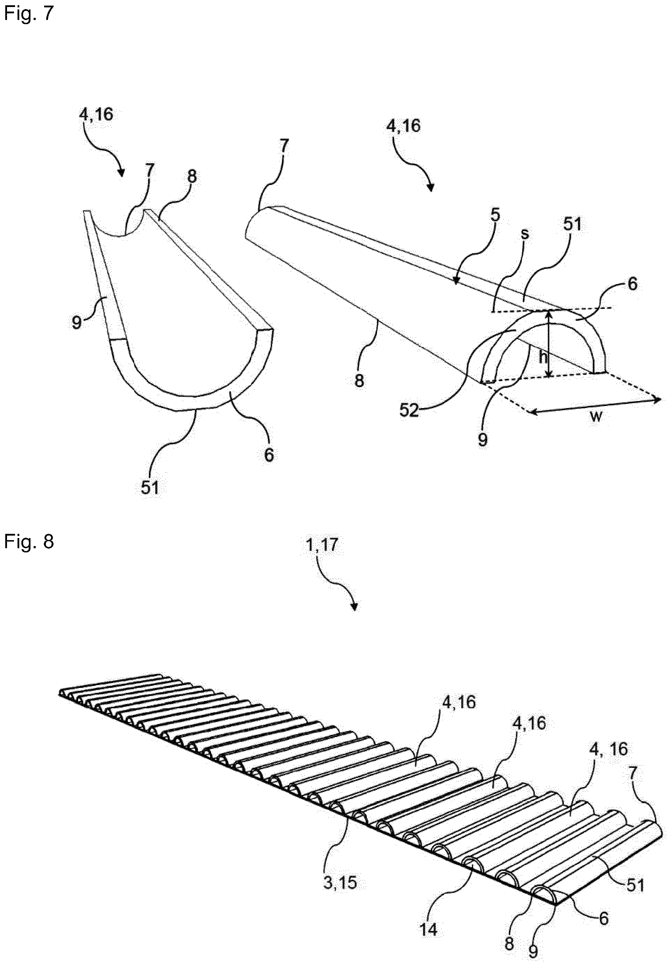

Die Fig. 7 zeigt eine analog zu der Darstellung in Fig. 1 ausgeformte Segmentstange 16 bzw. ein Rohrsegment 4 mit einer zusätzlichen Abflachung 51, welche an der Wandung 5 der Segmentstange 16 bzw. des Rohrsegments 4 angeordnet ist. In dem hier gezeigten Beispiel wird die Abflachung 51 durch eine gedachte Sekante s eines den Querschnitt der Wandung 5 bildenden Kreisringabschnitt 52 gebildet, wobei in diesem Beispiel die Schnittflächen 6,7 des Rohrsegments 4 den Querschnitt der Wandung 5 bilden. Dabei ist die Sekante s so angeordnet, dass der äußere das Kreisringabschnitt 52 begrenzende Kreis an zwei Punkten von der Sekante s geschnitten wird, der innere das Kreisringabschnitt 52 begrenzende Kreis jedoch nicht von der Sekante s geschnitten wird. Die dargestellte Abflachung 51 ist im Bereich des Zenits, also am höchsten Punkt des Kreisringabschnitts 52 angeordnet.

Die Segmenthöhe h entspricht in der gezeigten Ausführungsform dem Abstand zwischen der Sekante s und der (gedachten) Verbindungslinie zwischen den Schnittenden 8,9, wobei die Sekante s und die Verbindungslinie parallel zueinander verlaufen. Die dargestellte Abflachung 51 verläuft in Richtung der Längserstreckung des Rohrsegments 4 parallel zu den Schnittenden 8,9. Somit weist das Rohrsegment 4 im Bereich der Abflachung 51 und (im Fall eines einheitlichen Rohrdurchmessers) über die Längserstreckung des Rohrsegments 4 eine einheitliche Segmenthöhe h auf.

Diese einheitliche Segmenthöhe h ermöglicht ein einfaches Verbinden des Rohrsegments 4 mit einer flächigen Struktur, z.B. einer Platte, mittels der Abflachung 51, wobei eine formschlüssige Verbindung zwischen der Abflachung 51 und der flächigen Struktur ohne nachteilige Lücken erreichbar ist. Insbesondere ermöglicht eine solche Abflachung 51 eine einfache Verbindung bzw. Stapelung von Stegen 1, welche Rohrsegmente 4 mit Abflachungen 51 aufweisen oder eine Verbindung bzw. Stapelung von entsprechenden Stegen 1 mit Platten, z.B. bei der Erzeugung von Sandwich-Platten oder Sandwich-Blöcken gemäß der vorliegenden Erfindung.

Die Fig. 8 zeigt eine perspektivische Darstellung einer ersten Ausgestaltung eines Stegs 1, bzw. eines Zwischenprodukts 17 zur Erzeugung eines Stegs 1. Der Steg 1 bzw. das Zwischenprodukt 17 weist eine Platte 3,15 auf, die im Fall eines Stegs 1 als Stegbasis 3, im Fall eines Zwischenprodukts 17 als Basisplatte 15 bezeichnet wird. Die Stegbasis 3 bzw. die Basisplatte 15 ist an einer Verbindungsfläche 14 mit einer Mehrzahl von Rohrsegmenten 4 (im Fall eines Stegs 1) bzw. Segmentstangen 16 (im Fall eines Zwischenprodukts 17) verbunden, wobei die Verbindungsfläche 14 mit den Schnittenden 8,9 der Rohrsegmente 4 bzw. Segmentstangen 16 verbunden sind. In dem gezeigten Beispiel sind alle dargestellten Rohrsegmente 4 bzw. Segmentstangen 16 auf derselben Verbindungsfläche 14 angeordnet, wobei die gegenüberliegende Fläche der Stegbasis 3 bzw. Basisplatte 15 nicht mit Rohrsegmenten 4 bzw. Segmentstangen 16 verbunden ist. Des Weiteren sind die gezeigten Rohrsegmente 4 bzw. Segmentstangen 16 in Bezug auf die Richtung ihrer Längserstreckung parallel zueinander und mit einem Abstand zueinander angeordnet. Die in Fig. 8 dargestellten Rohrsegmente 4 bzw. Segmentstangen 16 weisen jeweils eine Abflachung 51 auf, wobei die Abflachungen 51 analog zu der in Fig. 7 dargestellten Abflachung 51 ausgeformt sind. Es sind jedoch auch andere Formen von Abflachungen 51 möglich. Auch können bei der in Fig. 8 gezeigten Anordnung bei einigen oder allen Rohrsegmenten 4 bzw. Segmentstangen 16 die Abflachungen 51 fehlen.

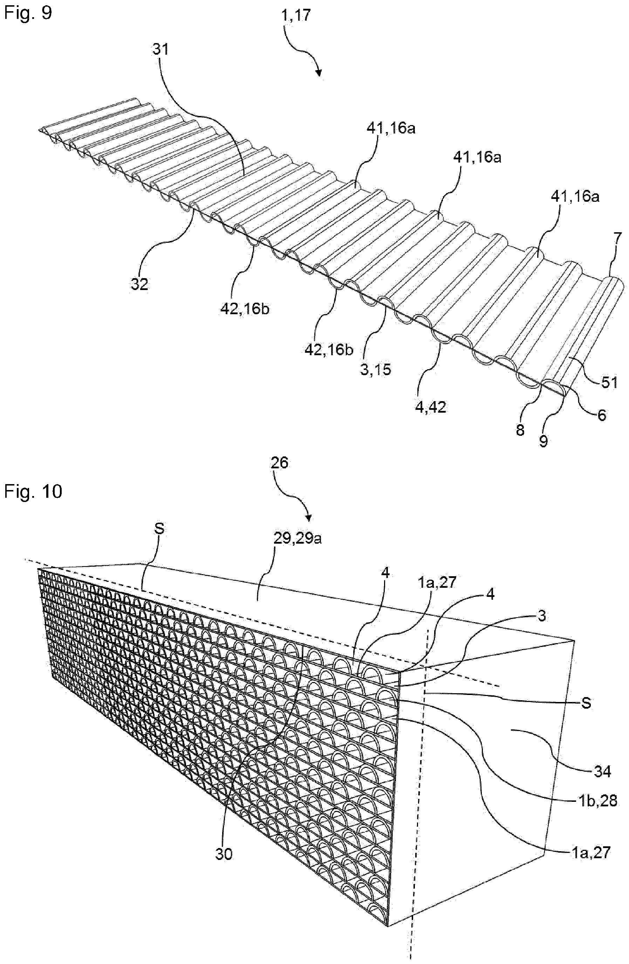

Die Fig. 9 zeigt eine zweite Ausgestaltung eines Stegs 1, bzw. eines Zwischenprodukts 17 zur Erzeugung eines Stegs 1. Die Stegbasis 3 bzw. die Basisplatte 15 weist eine erste Fläche 31 sowie eine zweite Fläche 32 auf, wobei eine Mehrzahl von ersten Rohrsegmenten 41, bzw. ersten Segmentstangen 16a mit der ersten Fläche 31 verbunden ist und wobei eine Mehrzahl von zweiten Rohrsegmenten 42, bzw. zweiten Segmentstangen 16b mit der zweiten Fläche 32 verbunden ist. Die gezeigten Rohrsegmente 41,42 bzw. Segmentstangen 16a,16b sind in Bezug auf die Richtung ihrer Längserstreckung parallel zueinander angeordnet. Dabei sind die ersten Rohrsegmente 41 bzw. ersten Segmentstangen 16a versetzt zu den zweiten Rohrsegmenten 42 bzw. zweiten Segmentstangen 16b angeordnet, so dass sich im Querschnitt, das heißt mit Blick auf die Schnittflächen 6,7 eine wellenförmige Anordnung ergibt. Die in Fig. 9 dargestellten Rohrsegmente 4 bzw. Segmentstangen 16 weisen ebenfalls jeweils eine Abflachung 51 auf, wobei die Abflachungen 51 analog zu der in Fig. 7 dargestellten Abflachung 51 ausgeformt sind. Es sind jedoch auch andere Formen von Abflachungen 51 möglich. Auch können bei der in Fig. 9 gezeigten Anordnung bei einigen oder allen Rohrsegmenten 4 bzw. Segmentstangen 16 die Abflachungen 51 fehlen.

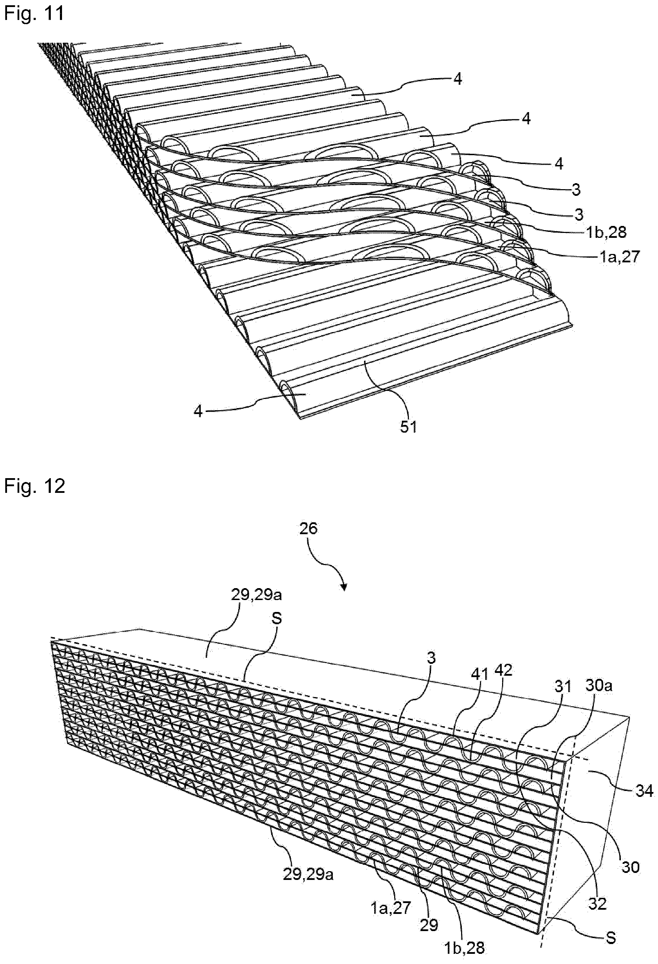

Die Fig. 10 zeigt eine perspektivische Ansicht einer ersten Ausgestaltung eines Sandwich-Blocks 26 und die Fig. 11 zeigt eine perspektivische Ansicht eines Teilschnitts einer derartigen Ausgestaltung des Sandwich-Blocks 26.

Der dargestellte Sandwich-Block 26 weist eine Mehrzahl von Stegschichten 27,28 aus jeweils einem Steg 1a,1b und eine Blockplattenschicht 29 aus einer Platte, insbesondere einer Holzplatte, auf, wobei die Stegschichten 27,28 und die Blockplattenschicht 29 schichtweise angeordnet und insbesondere miteinander verbunden sind. Dabei sind die Stegbasen 3 der Stege 1a,1b der Stegschichten 27,28 parallel zu der Platte der Blockplattenschicht 29 angeordnet und die Rohrsegmente 4 sind in Bezug auf die Richtung ihrer Längserstreckung parallel zueinander angeordnet. Die Wandungen 5 der Rohrsegmente 4 der ersten Stege 1a der ersten Stegschicht 27 sind mit der Stegbasis 3 der zweiten Stege 1b der benachbarten zweiten Stegschicht 28 verbunden, insbesondere mittels der Abflachungen 51.

Die in Fig. 10 und 11 dargestellten Stege 1a,1b weisen die in Fig. 8 gezeigte Ausgestaltung auf, wobei die Stege 1a,1b benachbarter Stegschichten 27,28 in dem hier gezeigten Beispiel derart versetzt zueinander angeordnet sind, dass die Rohrsegmente 4 der ersten Stege 1a über bzw. unter einem entsprechenden Abstand zwischen zwei Rohrsegmenten 4 der benachbarten zweiten Stege 1b angeordnet sind.

Aus dem dargestellten Sandwich-Block 26 kann insbesondere durch Zerteilen, Schneiden oder Sägen entlang einer Schneiderichtung S senkrecht zur Segmenttiefe d der Rohrsegmente 4 der Stege 1a,1b der Stegschichten 27,28 eine Mehrzahl von Kernschichten 13,21,25 einer Sandwich-Platte 2 erzeugt werden.

Der Sandwich-Block 26 umfasst weiterhin eine Deckplatte 29a, welche parallel zu den Stegschichten 27,28 und den Blockplattenschichten 29 angeordnet ist und eine Randplatte 34, die senkrecht zu den Stegschichten 27,28 und den Blockplattenschichten 29 angeordnet ist. Sowohl die Deckplatte 29a als auch die Randplatte 34 schließt den Sandwich-Block 26 einseitig ab.

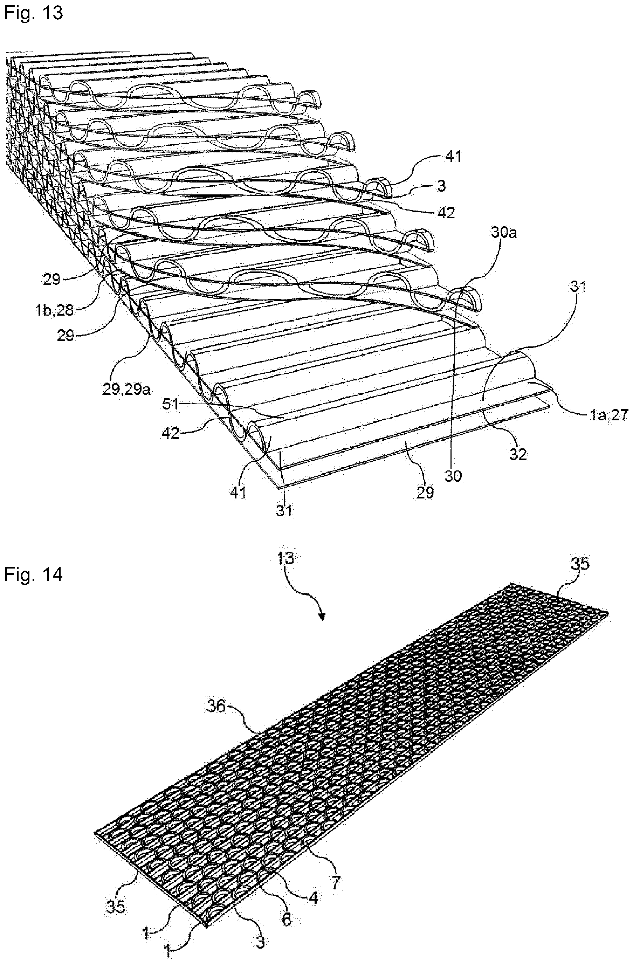

Die Fig. 12 zeigt eine perspektivische Ansicht einer zweiten Ausgestaltung eines Sandwich-Blocks 26 und die Fig. 13 zeigt eine perspektivische Ansicht eines Teilschnitts einer derartigen Ausgestaltung des Sandwich-Blocks 26. Der dargestellte Sandwich-Block 26 weist eine Mehrzahl von Stegschichten 27,28 aus jeweils einem Steg 1a,1b sowie einer Mehrzahl von Blockplattenschichten 29 aus jeweils einer Platte, insbesondere einer Holzplatte, auf, wobei die Stegschichten 27,28 und die Blockplattenschichten 29 schichtweise angeordnet und insbesondere miteinander verbunden sind. Dabei sind die Stegbasen 3 der Stege 1a,1b der Stegschichten 27,28 parallel zu der Platte der Blockplattenschicht 29 angeordnet und die Rohrsegmente 4 sind in Bezug auf die Richtung ihrer Längserstreckung parallel zueinander angeordnet. Die Stegschichten 27,28 sind abwechselnd mit den Blockplattenschichten 29 derart schichtweise angeordnet, dass eine erste Stegschicht 27 mit einer ersten Plattenseite 30 der Blockplattenschicht 29 verbunden ist und besagte Blockplattenschicht 29 mittels einer zweiten Plattenseite 30b mit einer zweiten Stegschicht 28 verbunden ist.

Die in Fig. 12 und 13 dargestellten Stege 1a,1b weisen die in Fig. 9 gezeigte Ausgestaltung auf. Dabei sind die Wandungen 5 der ersten Rohrsegmente 41 der ersten Stege 1a der ersten Stegschicht 27 mit einer ersten Plattenseite 30 der Platte der benachbarten Blockplattenschicht 29 verbunden und die Wandungen 5 der zweiten Rohrsegmente 42 der zweiten Stege 1b der zweiten Stegschicht 28 sind mit einer der ersten Plattenseite 30 gegenüberliegenden zweiten Plattenseite 30a verbunden. Insbesondere sind die ersten Rohrsegmente 41 und die zweiten Rohrsegmente 42 mittels ihrer jeweiligen Abflachungen 51 mit der entsprechenden Platte verbunden. Die Stege 1a,1b benachbarter Stegschichten 27,28 sind in dem hier gezeigten Beispiel derart zueinander angeordnet sind, dass jedes erste Rohrsegment 41 der ersten Stegschicht 27 über bzw. unter einem entsprechenden zweiten Rohrsegment 42 der benachbarten zweiten Stegschicht 28 angeordnet ist.

Aus dem dargestellten Sandwich-Block 26 kann ebenfalls insbesondere durch Zerteilen, Schneiden oder Sägen entlang einer Schneiderichtung S senkrecht zur Richtung der Längserstreckung der Rohrsegmente 41,42 der Stege 1a,1b der Stegschichten 27,28 eine Mehrzahl von Kernschichten 13,21,25 einer Sandwich-Platte 2 erzeugt werden.

Der Sandwich-Block 26 umfasst weiterhin eine Deckplatte 29a, welche parallel zu den Stegschichten 27,28 und den Blockplattenschichten 29 angeordnet ist und eine Randplatte 34, die senkrecht zu den Stegschichten 27,28 und den Blockplattenschichten 29 angeordnet ist. Sowohl die Deckplatte 29a als auch die Randplatte 34 schließt den Sandwich-Block 26 einseitig ab.

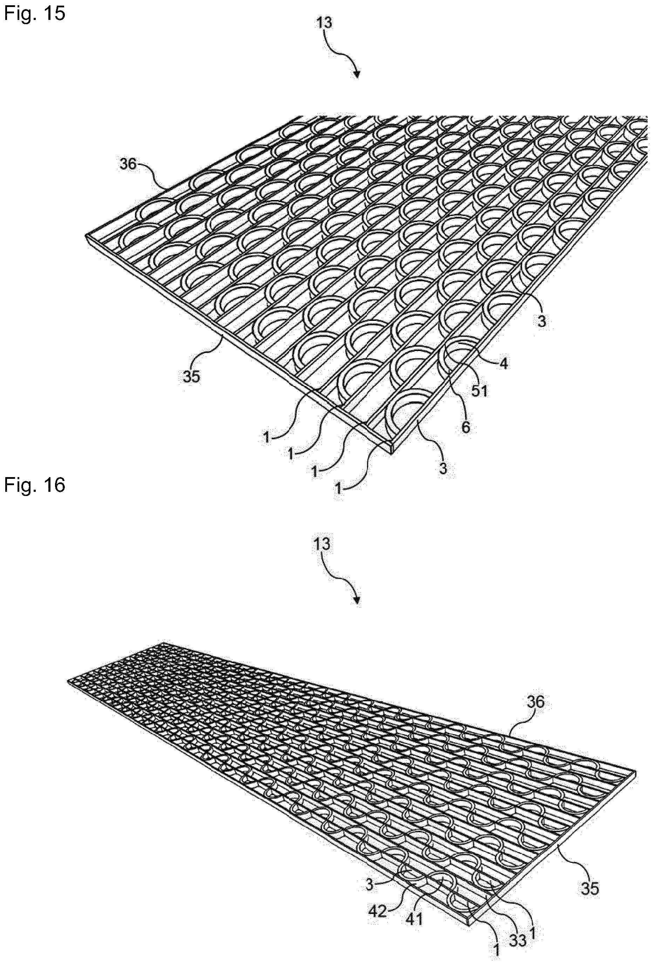

Die Fig. 14 zeigt eine erste Ausgestaltung einer Kernschicht 13,21,25 einer Sandwich-Platte 2, wobei die Sandwich-Platte entsprechend der Fig. 5 oder 6 oder analog dazu ausgeformt sein kann. Fig. 15 zeigt eine Detailansicht eines Teils einer entsprechenden Kernschicht 13,21,25.

Die Kernschicht 13,21,25 weist eine Mehrzahl von Stegen 1 auf, die derart angeordnet sind, dass die ersten Schnittflächen 6 und die zweiten Schnittflächen 7 jeweils eine Ebene ausbilden. Mittels der derart ausgerichteten Schnittflächen 6,7 kann die Kernschicht 13,21,25 insbesondere mit wenigstens einer Plattenschicht 11,12,23 verbunden werden. In der dargestellten Ausführungsform sind die Stege 1 in Bezug auf ihre jeweilige Stegbasis 3 parallel zueinander ausgerichtet. Dabei ist jeweils ein Steg 1 mittels der Wandungen 5 seiner Rohrsegmente 4, insbesondere mittels der Abflachungen 51 seiner Wandungen 5 mit einer Stegbasis 3 eines benachbarten Stegs 1 verbunden. Die Kernschicht 13,21,25 weist weiterhin zwei Randleisten 35 auf, die senkrecht zu Erstreckungsrichtung der Stegbasen 3 angeordnet sind und die Kernschicht 13,21,25 seitlich begrenzen. Weiterhin weist die Kernschicht 13,21,25 eine Deckleiste 36 auf, welche parallel zur Erstreckungsrichtung der Stegbasen 3 ausgerichtet ist und die Kernschicht 13,21,25 einseitig abschließt. Die Anordnung der Rohrsegmente 4 in der dargestellten Kernschicht 13,21,25 in der Ebene ihrer Schnittflächen 6,7 entspricht der in Fig. 8 gezeigten Anordnung. Insbesondere kann eine solche Kernschicht 13,21,25 durch Zerteilen eines in Fig. 10 dargestellten Sandwich-Blocks 26 parallel zu der Schneiderichtung S erzeugt werden, wobei aus der Deckplatte 29a die Deckleiste 36 gebildet wird und wobei aus der Randplatte 34 die Randleiste 35 gebildet wird.

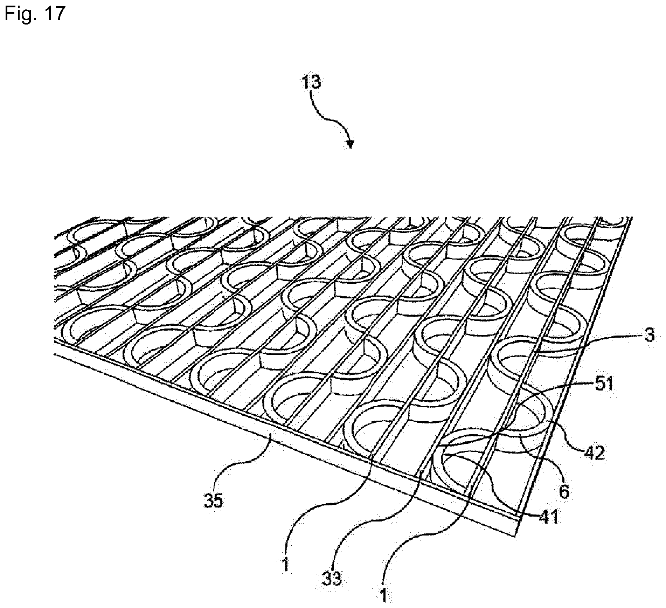

Die Fig. 16 zeigt eine zweite Ausgestaltung einer Kernschicht 13,21,25 einer Sandwich-Platte 2, wobei die Sandwich-Platte entsprechend der Fig. 5 oder 6 oder analog dazu ausgeformt sein kann. Fig. 17 zeigt eine Detailansicht eines Teils einer entsprechenden Kernschicht 13,21,25.

Die Kernschicht 13,21,25 weist eine Mehrzahl von Stegen 1 auf, die derart angeordnet sind, dass die ersten Schnittflächen 6 und die zweiten Schnittflächen 7 jeweils eine Ebene ausbilden. Mittels der derart ausgerichteten Schnittflächen 6,7 kann die Kernschicht 13,21,25 insbesondere mit wenigstens einer Plattenschicht 11,12,23 verbunden werden. In der dargestellten Ausführungsform sind die Stege 1 in Bezug auf ihre jeweilige Stegbasis 3 parallel zueinander ausgerichtet. Die hier gezeigte Anordnung der Rohrsegmente 41,42 in der Ebene ihrer Schnittflächen 6,7 entspricht der in Fig. 9 gezeigten wellenförmigen Konfiguration.

Dabei ist jeweils ein Steg 1 mittels der Wandungen 5 seiner ersten Rohrsegmente 41, insbesondere mittels der Abflachungen 51 seiner Wandungen 5 mit einer Zwischenleiste 33 verbunden. Die entsprechende Zwischenleiste 33 ist mit den zweiten Rohrsegmenten 42 eines benachbarten Stegs 1 verbunden. Die Kernschicht 13,21,25 weist weiterhin zwei Randleisten 35 auf, die senkrecht zu Erstreckungsrichtung der Stegbasen 3 angeordnet sind und die Kernschicht 13,21,25 seitlich begrenzen. Weiterhin weist die Kernschicht 13,21,25 eine Deckleiste 36 auf, welche parallel zur Erstreckungsrichtung der Stegbasen 3 ausgerichtet ist und die Kernschicht 13,21,25 einseitig abschließt. Insbesondere kann eine solche Kernschicht 13,21,25 durch Zerteilen eines in Fig. 12 dargestellten Sandwich-Blocks 26 parallel zu der Schneiderichtung S erzeugt werden, wobei aus der Deckplatte 29a die Deckleiste 36 gebildet wird, wobei aus der Randplatte 34 die Randleiste 35 gebildet wird, und wobei aus den Plattenschichten 29 die Zwischenleisten 33 gebildet werden.

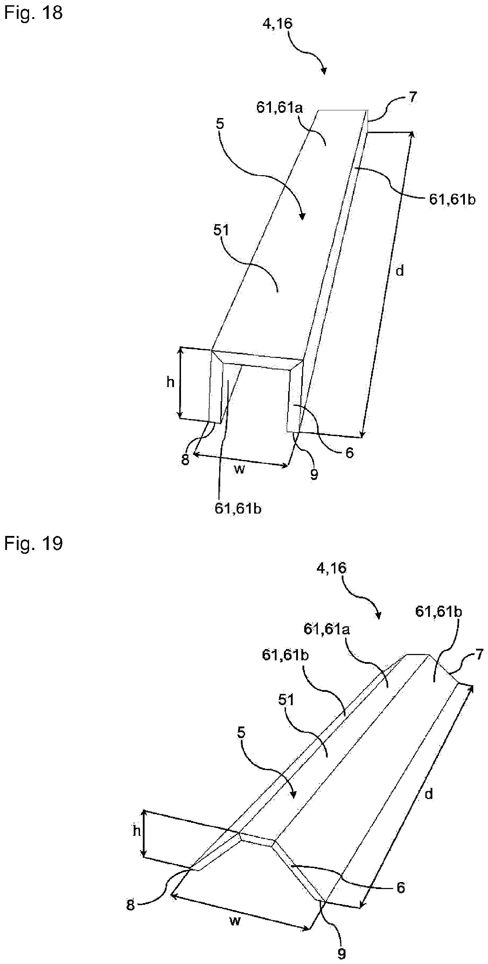

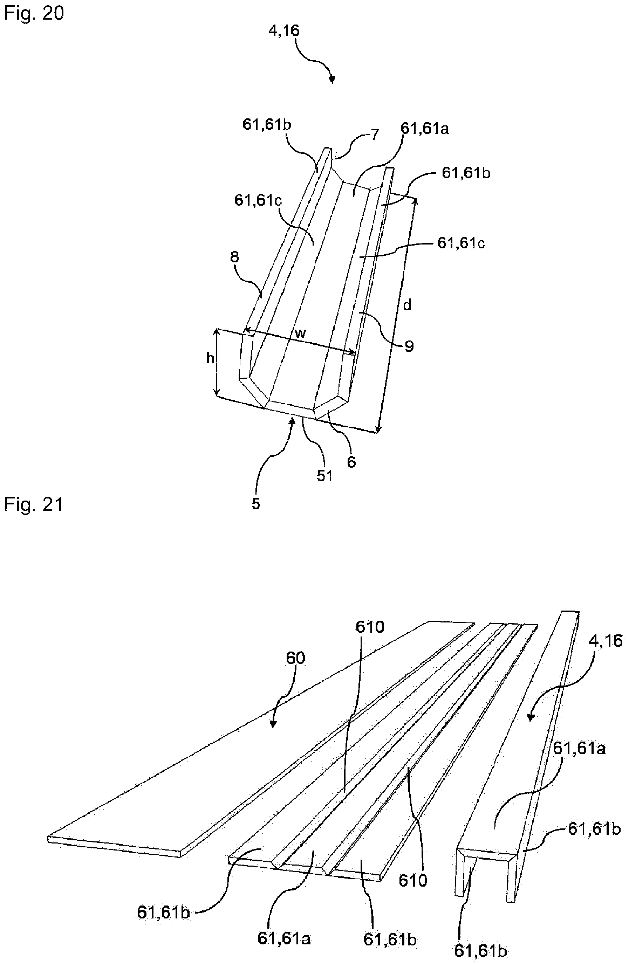

Die Fig. 18-20 zeigen Rohrsegmente 4 bzw. Segmentstangen 16 mit Wandungen 5, welche ein eckiges Querschnittsprofil aufweisen. Dabei zeigt Fig. 18 ein Rohrsegment 4 bzw. eine Segmentstange 16 mit einer im Querschnitt U-förmigen Wandung 5 mit zwei Ecken. Ein derartiges Rohrsegment 4 bzw. eine derartige Segmentstange 16 ist insbesondere aus drei miteinander verbundenen, insbesondere verleimten, Leisten 61 gebildet, wobei die Leisten 61 in einem Winkel von 90° zueinander angeordnet sind. Dabei bildet die mittlere Leiste 61a eine parallel zu der Segmentbreite w positionierte Abflachung 51 der Wandung 5. Derartige Leisten 61 sind ebenfalls in Fig. 21 gezeigt und können insbesondere durch Ausfräsen von entsprechend gewinkelten Gehrungen 610 aus einem in Fig. 21 gezeigten Brett 60 hergestellt werden. Hierbei ist zu beachten, dass die Gehrungen 610 nicht durchgängig ausgeführt sind, so dass die Leisten 61 bei der Erzeugung der Gehrungen 610 nicht vollständig voneinander getrennt werden, sondern durch eine Verbindungsschicht an der jeweiligen Gehrung zusammengehalten werden. Dadurch wird ein Zusammenfügen des Rohrsegments 4 erleichtert. Zusätzlich bilden die Gehrungen auf diese Weise Vertiefungen zur Aufnahme von Leim, was ebenfalls ein Zusammenfügen der Leisten 61 erleichtert.

Alternativ dazu kann ein solches Rohrsegment 4 bzw. eine solche Segmentstange 16 durch Zerteilen, insbesondere Zersägen eines Rohrs mit einem quadratischen Querschnitt erzeugt werden.

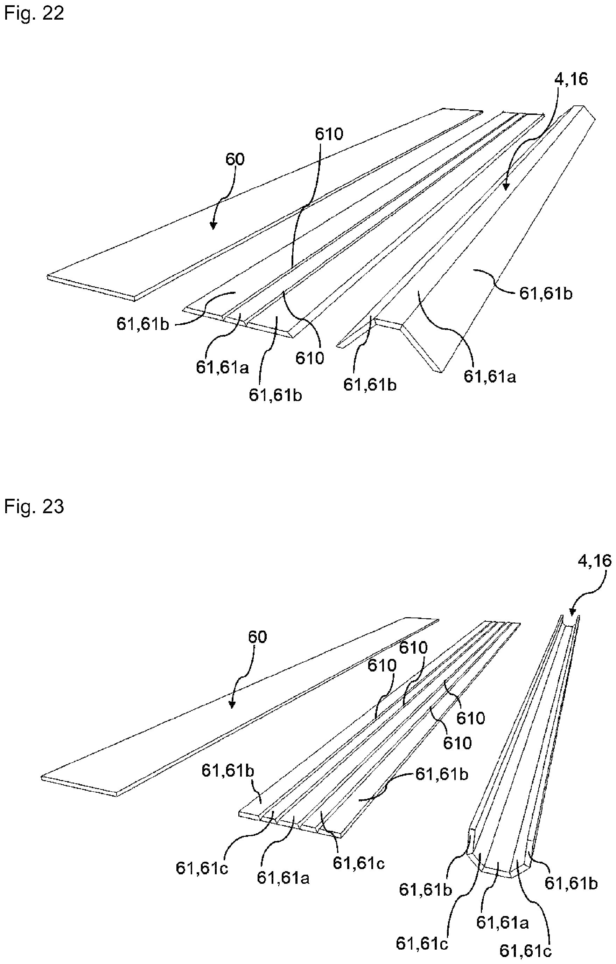

Die Fig. 19 zeigt ein Rohrsegment 4 bzw. eine Segmentstange 16 mit einer im Querschnitt trapezsegmentförmigen Wandung 5 mit zwei Ecken. Ein derartiges Rohrsegment 4 bzw. eine derartige Segmentstange 16 ist insbesondere aus drei miteinander verbundenen, insbesondere verleimten, Leisten 61 gebildet, wobei die Leisten 61 in einem stumpfen Winkel zueinander angeordnet sind. In der gezeigten Anordnung weist die mittlere Leiste 61a eine geringere Breite auf als die beiden gewinkelten äußeren Leisten 61b. Die mittlere Leiste 61a ist hier ebenfalls parallel zu der Segmentbreite w angeordnet und bildet eine Abflachung 51. Derartige Leisten 61 sind ebenfalls in Fig. 22 gezeigt und können insbesondere durch Ausfräsen von entsprechend gewinkelten Gehrungen 610 aus einem in Fig. 22 gezeigten Brett 60 hergestellt werden.

Die Fig. 20 zeigt ein Rohrsegment 4 bzw. eine Segmentstange 16 mit einer im Querschnitt achtecksegmentförmigen Wandung 5 mit vier Ecken. Ein derartiges Rohrsegment 4 bzw. eine derartige Segmentstange 16 ist insbesondere aus fünf miteinander verbundenen, insbesondere verleimten, Leisten 61 gebildet, wobei die Leisten 61 jeweils einen Winkel von 45° zueinander aufweisen. Dabei sind die äußeren Leisten 61b, welche die Schnittenden 8,9 bilden, in einem Winkel von 90° zu der Segmentbreite w angeordnet und eine mittlere Leiste 61a, die durch zwei Verbindungsleisten 61c mit den äußeren Leisten 61b verbunden ist, ist parallel zu der Segmentbreite w angeordnet. Diese mittlere Leiste 61a bildet eine Abflachung 51 der Wandung 5. Derartige Leisten 61 sind ebenfalls in Fig. 23 gezeigt und können insbesondere durch Ausfräsen von entsprechend gewinkelten Gehrungen 610 aus einem in Fig. 23 gezeigten Brett 60 hergestellt werden.

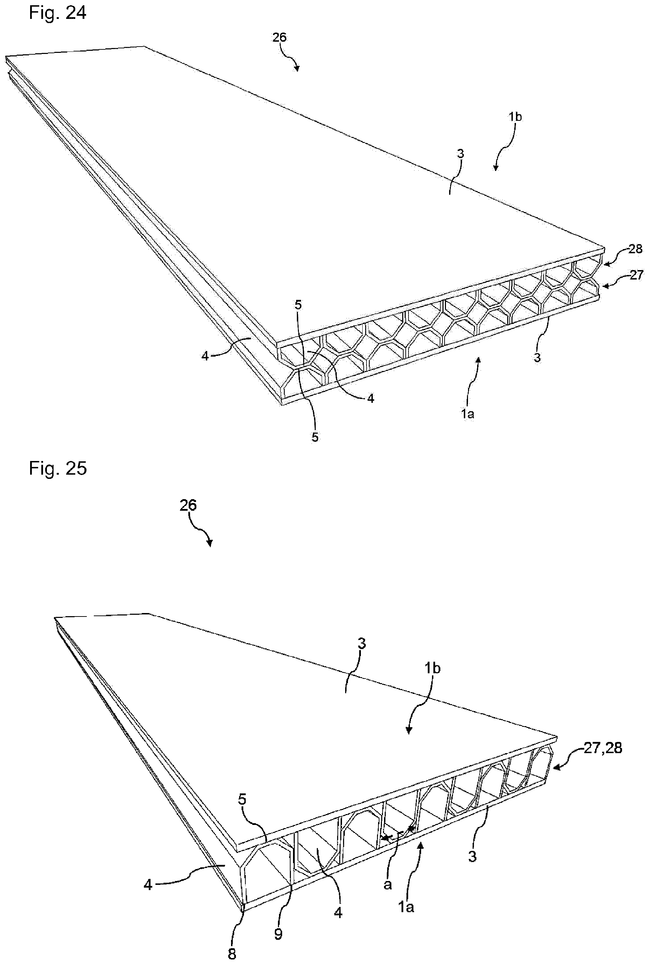

Die Fig. 24 zeigt eine perspektivische Ansicht eines Sandwich-Blocks 26 in einer weiteren Ausführungsform. Der Sandwich-Block 26 weist einen ersten Steg 1a und einen mit dem ersten Steg 1a mechanisch verbundenen zweiten Steg 1b auf, wobei der erste Steg 1a eine erste Stegschicht 27 ausbildet, und wobei der zweite Steg 1b eine zweite Stegschicht 28 ausbildet. Dabei sind die Stege 1a,1b antiparallel ausgerichtet, das heißt der zweite Steg 1b ist in Bezug auf den ersten Steg 1a um 180° um die Längserstreckungsrichtung bzw. Segmenttiefe d der Rohrsegmente 4 der Stege 1a,1b gedreht. Dabei sind die Rohrsegmente 4 des ersten Stegs 1a mittels ihrer Wandungen 5 mit den Wandungen 5 der entsprechenden Rohrsegmente 4 des zweiten Stegs 1b mechanisch verbunden. In der gezeigten Ausführungsform weisen die Rohrsegmente 4 einen achtecksegmentförmigen Querschnitt auf. Die gezeigte Anordnung des Sandwich-Blocks 26 ist jedoch nicht auf diese Querschnittsform beschränkt.

Die Fig. 25 zeigt eine perspektivische Ansicht eines Sandwich-Blocks 26 in einer weiteren Ausführungsform. Der Sandwich-Block weist einen ersten Steg 1a und einen zweiten Steg 1b auf, wobei der erste Steg 1a und der zweite Steg 1b eine gemeinsame zwischen den Stegbasen 3 angeordnete Stegschicht 27,28 ausbilden. Die Stege 1a,1b sind antiparallel ausgerichtet, das heißt der zweite Steg 1b ist in Bezug auf den ersten Steg 1a um 180° um die Längserstreckungsrichtung bzw. Segmenttiefe d der Rohrsegmente 4 der Stege 1a,1b gedreht.

Dabei bildet die Stegbasis 3 des ersten Stegs 1a den unteren Abschluss des Sandwich-Blocks 26. Die Stegbasis 3 des zweiten Stegs 1b bildet den oberen Abschluss des Sandwich-Blocks 26. Die Rohrsegmente 4, die mittels ihrer Schnittenden 8,9 mit der unteren Stegbasis 3 verbunden sind, sind dem ersten Steg 1a zugeordnet und die Rohrsegmente 4, die mittels ihrer Schnittenden 8,9 mit der oberen Stegbasis 3 verbunden sind, sind dem zweiten Steg 1b zugeordnet. Dabei sind die Rohrsegmente 4 des ersten und zweiten Stegs 1a,1b innerhalb der Schicht 27,28 abwechselnd angeordnet.

Die Rohrsegmente 4 des ersten Stegs 1a und des zweiten Stegs 1b weisen jeweils in Richtung der Segmentbreite w einen Abstand a auf, der in der gezeigten Ausführungsform einer Segmentbreite w entspricht, aber alternativ auch größer als eine Segmentbreite w sein kann. Durch den Abstand a weisen der erste Steg 1a und der zweite Steg 1b jeweils Lücken auf, in denen die Rohrsegmente 4 des jeweils anderen Stegs 1b,1a angeordnet sind. Die Wandungen 5 des ersten Stegs 1a sind dabei mit der Stegbasis 3 des zweiten Stegs 1b verbunden und die Wandungen 5 des zweiten Stegs 1b sind mit der Stegbasis 3 des ersten Stegs 1a mechanisch verbunden. In der gezeigten Ausführungsform weisen die Rohrsegmente 4 einen achtecksegmentförmigen Querschnitt auf. Die gezeigte Anordnung des Sandwich-Blocks 26 ist jedoch nicht auf diese Querschnittsform beschränkt.

### Bezugszeichenliste

- 1: Steg
- 1a: Erster Steg
- 1b: Zweiter Steg
- 2: Sandwich-Platte
- 3: Stegbasis
- 4: Rohrsegment
- 5: Wandung
- 6: erste Schnittfläche
- 7: zweite Schnittfläche
- 8: erstes Schnittende
- 9: zweites Schnittende
- 10: Rohr
- 11: erste Plattenschicht
- 12: zweite Plattenschicht
- 13: erste Kernschicht
- 14: Verbindungsfläche
- 15: Basisplatte
- 16: Segmentstange
- 16a: erste Segmentstange
- 16b: zweite Segmentstange
- 17: Zwischenprodukt
- 18: Fügefläche
- 19: zweite Verbindungsfläche
- 20: dritte Verbindungsfläche
- 21: zweite Kernschicht
- 22: vierte Verbindungsfläche
- 23: dritte Plattenschicht
- 24: fünfte Verbindungsfläche
- 25: dritte Kernschicht
- 26: Sandwich-Block
- 27: Erste Stegschicht
- 28: Zweite Stegschicht
- 29: Blockplattenschicht
- 29a: Deckplatte
- 30: Erste Plattenseite
- 30a: Zweite Plattenseite
- 31: Erste Fläche
- 32: Zweite Fläche
- 33: Leiste
- 34: Randplatte
- 35: Randleiste
- 36: Deckleiste
- 41: Erstes Rohrsegment
- 42: Zweites Rohrsegment
- 51: Abflachung
- 52: Kreisringabschnitt
- 60: Brett
- 61: Leiste
- 61a: mittlere Leiste
- 61b: äußere Leiste
- 61c: Verbindungsleiste
- 610: Gehrung
- h: Segmenthöhe
- b: Basishöhe
- H: Steghöhe
- w: Segmentbreite
- d: Segmenttiefe
- D: Stegtiefe
- W: Stegbreite
- t: Stärke der Wandung
- s: Sekante
- S: Schneiderichtung
- L: Stangenlänge
- a: Abstand

## Patentansprüche

1. Steg (1), insbesondere für eine Sandwich-Platte (2), aufweisend wenigstens die folgenden Komponenten:
i. eine Stegbasis (3),
ii. wenigstens ein Rohrsegment (4), das eine Wandung (5) aufweist, die in Umfangsrichtung des jeweiligen Rohrsegments (4) durch mindestens zwei, insbesondere genau zwei, Schnittenden (8,9) begrenzt ist, wobei die Wandung (5) in Längserstreckungsrichtung des Rohrsegments (4) durch zwei Schnittflächen (6,7) begrenzt ist, und wobei das wenigstens eine Rohrsegment (4) jeweils eine Segmenthöhe (h) aufweist, welche die maximale Erstreckung des jeweiligen Rohrsegments (4) senkrecht zu der Stegbasis (3) darstellt, und wobei das wenigstens eine Rohrsegment (4) eine in Längserstreckungsrichtung verlaufende Segmenttiefe (d) aufweist,
und wobei der Steg (1) eine Stegtiefe (D) aufweist, die in der Längserstreckungsrichtung des wenigstens einen Rohrsegments (4) verläuft,
**dadurch gekennzeichnet,**
**dass** das wenigstens eine Rohrsegment (4) jeweils mittels der mindestens zwei Schnittenden (8,9) mit der Stegbasis (3) mechanisch verbunden ist, wobei die Stegtiefe (D) gleich groß ist wie die Segmenttiefe (d) des wenigstens einen Rohrsegments (4), wobei das wenigstens eine Rohrsegment (4) aus einem Holzwerkstoff besteht oder einen Holzwerkstoff aufweist.

2. Steg (1) nach Anspruch 1, **dadurch gekennzeichnet, dass** der Steg (1) wenigstens zwei Rohrsegmente (4) aufweist, welche dieselbe Segmenthöhe (h) aufweisen.

3. Steg (1) nach Anspruch 1 oder 2, **dadurch gekennzeichnet, dass** die Wandung (5) des wenigstens einen Rohrsegments (4) eine Abflachung (51) aufweist.

4. Steg (1) nach einem der Ansprüche 1 bis 3, **dadurch gekennzeichnet, dass** das wenigstens eine Rohrsegment (4) jeweils einen eckigen Querschnitt, insbesondere einen achtecksegmentförmigen Querschnitt, aufweist.

5. Steg (1) nach einem der Ansprüche 1 bis 4, **dadurch gekennzeichnet, dass** der Steg (1) wenigstens zwei Rohrsegmente (4) aufweist, wobei die mindestens zwei Schnittenden (8,9) der wenigstens zwei Rohrsegmente (4) mit einer ersten Fläche (31) der Stegbasis (3) mechanisch verbunden sind.

6. Steg (1) nach einem der Ansprüche 1 bis 4, **dadurch gekennzeichnet, dass** der Steg (1) wenigstens ein erstes Rohrsegment (41) und wenigstens ein zweites Rohrsegment (42) aufweist, wobei die mindestens zwei Schnittenden (8,9) des wenigstens einen ersten Rohrsegments (41) mit einer ersten Fläche (31) der Stegbasis (3) verbunden sind, und wobei die mindestens zwei Schnittenden (8,9) des wenigstens einen zweiten Rohrsegments (42) mit einer der ersten Fläche (31) gegenüberliegenden zweiten Fläche (32) der Stegbasis (3) verbunden sind, wobei insbesondere entlang einer Stegbreite (W) die ersten Rohrsegmente (41) und die zweiten Rohrsegmente (42) abwechselnd entlang der Stegbasis (3) angeordnet sind.

7. Steg (1) nach einem der Ansprüche 1 bis 6, **dadurch gekennzeichnet, dass** die Stegbasis (3) eine Basishöhe (b) in Richtung der Segmenthöhe (h) der Rohrsegmente (4) des Stegs (1) aufweist, wobei das Verhältnis der Basishöhe (b) zu der Stegtiefe (D) zwischen 1 zu 1 und 1 zu 20, insbesondere zwischen 2 zu 3 und 1 zu 10, beträgt.

8. Steg (1) nach einem der Ansprüche 1 bis 7, **dadurch gekennzeichnet, dass** der Steg (1) eine Mehrzahl von in Bezug auf ihre Längserstreckungsrichtung parallel angeordneter Rohrsegmente (4) mit einer senkrecht zu der Segmenthöhe (h) und der Längserstreckungsrichtung verlaufenden Segmentbreite (w) aufweist, wobei benachbarte Rohrsegmente (4) senkrecht zu der gemeinsamen Längserstreckungsrichtung einen Abstand (a) aufweisen, und wobei der Abstand (a) dem ein- bis zweifachen der Segmentbreite (w), insbesondere genau der Segmentbreite (w), entspricht.

9. Sandwich-Platte (2), insbesondere für den Rohbau oder Innenausbau, wobei die Sandwich-Platte (2) wenigstens eine Plattenschicht (11), insbesondere zwei Plattenschichten (11), und wenigstens eine Kernschicht (13) aufweist, wobei die wenigstens eine Plattenschicht (11) jeweils aus einer Platte ausgebildet ist, die eine Verbindungsfläche (14) aufweist,
**dadurch gekennzeichnet, dass**
die wenigstens eine Kernschicht (13) jeweils aus wenigstens einem Steg (1) nach einem der Ansprüche 1 bis 8 ausgebildet ist, wobei der wenigstens eine Steg (1) jeweils mittels einer der Schnittflächen (6,7) seines wenigstens einen Rohrsegments (4) mit der Verbindungsfläche (14) der wenigstens einen Plattenschicht (11) mechanisch verbunden ist.

10. Sandwich-Block (26), aufweisend wenigstens zwei Stegschichten (27,28), die jeweils aus wenigstens einem Steg (1) nach einem der Ansprüche 1 bis 8 ausgebildet sind,
**dadurch gekennzeichnet, dass**
die Stegschichten (27,28) in Richtung der Segmenthöhe (h) ihrer Stege (1) gestapelt sind, wobei optional zwischen zwei benachbarten Stegschichten (27,28) eine Blockplattenschicht (29) angeordnet sein kann und wobei insbesondere die Rohrsegmente (4) der Stege (1) in Bezug auf ihre jeweilige Längserstreckungsrichtung parallel zueinander angeordnet sind.

11. Sandwich-Block (26) nach Anspruch 10, **dadurch gekennzeichnet, dass** der Sandwich-Block (26) wenigstens eine erste Stegschicht (27) und eine zweite Stegschicht (28) aufweist, wobei die wenigstens eine erste Stegschicht (27) wenigstens einen ersten Steg (1a) nach einem der Ansprüche 1 bis 8 aufweist, und wobei die wenigstens eine zweite Stegschicht (28) wenigstens einen zweiten Steg (1b) nach einem der Ansprüche 1 bis 8 aufweist, und wobei der wenigstens eine erste Steg (1a) der ersten Stegschicht (27) mittels wenigstens einer Wandung (5) wenigstens eines seiner Rohrsegmente (4) mit der Stegbasis (3) der angrenzenden zweiten Stegschicht (28) mechanisch verbunden ist.

12. Sandwich-Block (26) nach Anspruch 10, **dadurch gekennzeichnet, dass** der Sandwich-Block (26) wenigstens eine erste Stegschicht (27) und eine zweite Stegschicht (28) aufweist, wobei die wenigstens eine erste Stegschicht (27) wenigstens einen ersten Steg (1a) nach einem der Ansprüche 1 bis 8 aufweist, und wobei die wenigstens eine zweite Stegschicht (28) wenigstens einen zweiten Steg (1b) nach einem der Ansprüche 1 bis 8 aufweist, und wobei der wenigstens eine erste Steg (1a) der ersten Stegschicht (27) mittels wenigstens einer Wandung (5) wenigstens eines seiner Rohrsegmente (4) mit einer Wandung (5) des wenigstens einen Rohrsegments (4) der angrenzenden zweiten Stegschicht (28) mechanisch verbunden ist.

13. Sandwich-Block (26) nach Anspruch 10, **dadurch gekennzeichnet, dass** der Sandwich-Block (26) wenigstens eine Stegschicht (27,28) aufweist, die aus wenigstens einem ersten Steg (1a) und wenigstens einem zweiten Steg (1b) ausgebildet ist, wobei der erste Steg (1a) und der zweite Steg (1b) jeweils nach Anspruch 8 ausgebildet sind, und wobei die Rohrsegmente (4) des wenigstens einen ersten Stegs (1a) und die Rohrsegmente (4) des wenigstens einen zweiten Stegs (1b) in einer gemeinsamen Ebene angeordnet sind, wobei die gemeinsame Ebene parallel zu der Erstreckungsrichtung der Stegbasen (3) des ersten Stegs (1a) und des zweiten Stegs (1b) verläuft, und wobei jedes Rohrsegment (4) des ersten Stegs (1a) wenigstens ein benachbartes Rohrsegment (4) des zweiten Stegs (1b) aufweist.

14. Verfahren zur Herstellung einer Sandwich-Platte (2), insbesondere nach Anspruch 9, wobei das Verfahren wenigstens die folgenden Schritte aufweist:
- Anordnen und Verbinden mindestens eines Stegs (1) nach einem der Ansprüche 1 bis 8 mit der ersten Schnittfläche (6,7) des wenigstens einen Rohrsegments (4) auf einer ersten Verbindungsfläche (14) einer ersten Plattenschicht (11) zum Bilden einer Kernschicht (13);
- optional Anordnen und Verbinden wenigstens einer zweiten Verbindungsfläche (19) einer zweiten Plattenschicht (12) auf der gegenüberliegenden zweiten Schnittfläche (6,7) des wenigstens einen Rohrsegments (4) des wenigstens einen Stegs (1).

15. Verfahren zur Herstellung einer Sandwich-Platte (2), insbesondere nach Anspruch 9, wobei das Verfahren wenigstens die folgenden Schritte aufweist:
- Bereitstellen eines Sandwich-Blocks (26) nach einem der Ansprüche 10 bis 13, wobei die Stegschichten (27,28) des Sandwich-Blocks (26) derart angeordnet sind, dass die Rohrsegmente (4) der Stege (1) in Bezug auf ihre Längserstreckungsrichtung parallel zueinander angeordnet sind;
- Erzeugen wenigstens einer Kernschicht (13) durch Zerteilen des Sandwich-Blocks (26), insbesondere quer zu der Längserstreckungsrichtung der Rohrsegmente (4), wobei eine Vielzahl von Schnittflächen (6,7) der Rohrsegmente (4) gebildet wird;
- Anordnen der Kernschicht (13) auf einer ersten Verbindungsfläche (14) einer ersten Plattenschicht (11) und Verbinden der Kernschicht (13) mit der ersten Verbindungsfläche (14), wobei die Rohrsegmente der Kernschicht (13) mittels ihrer ersten Schnittflächen (6) mit der Verbindungsfläche (14) der ersten Plattenschicht (11) verbunden werden;
- optional Anordnen wenigstens einer zweiten Verbindungsfläche (19) einer zweiten Plattenschicht (12) auf der Kernschicht (13) und Verbinden der zweiten Verbindungsfläche (19) mit der Kernschicht (13) mittels der zweiten Schnittflächen (7) der Rohrsegmente (4) der Kernschicht (13).

## Claims

1. Bar (1), in particular for a sandwich panel (2), comprising at least the following components:
i. a bar base (3),
ii. at least one tube segment (4), which comprises a wall (5) that is delimited in the circumferential direction of the respective tube segment (4) by at least two, in particular exactly two, cut ends (8, 9), wherein the wall (5) is delimited in the longitudinal extension direction of the tube segment (4) by two cut surfaces (6, 7) and wherein the at least one tube segment (4) comprises a segment height (h), respectively, which represents the maximum extension of the respective tube segment (4) perpendicular to the bar base (3), and wherein the at least one tube segment (4) comprises a segment depth (d) running in the longitudinal extension direction,
and wherein the bar (1) comprises a bar depth (D) which runs in the longitudinal extension direction of the at least one tube segment (4),
**characterized in that**
the at least one tube segment (4) is mechanically connected to the bar base (3) by means of the at least two cut ends (8, 9), respectively, wherein the bar depth (D) is equal to the segment depth (d) of the at least one tube segment (4), wherein the at least one tube segment (4) consists of a wood material or comprises a wood material.

2. Bar (1) according to claim 1, **characterized in that** the bar (1) comprises at least two tube segments (4) which comprise the same segment height (h).

3. Bar (1) according to claim 1 or 2, **characterized in that** the wall (5) of the at least one tube segment (4) comprises a flattening (51).

4. Bar (1) according to any one of claims 1 to 3, **characterized in that** the at least one tube segment (4) comprises respectively an edged cross-section, in particular an octagonal cross-section.

5. Bar (1) according to any one of claims 1 to 4, **characterized in that** the bar (1) comprises at least two tube segments (4), wherein the at least two cut ends (8, 9) of the at least two tube segments (4) are mechanically connected to a first surface (31) of the bar base (3).

6. Bar (1) according to any one of claims 1 to 4, **characterized in that** the bar (1) comprises at least one first tube segment (41) and at least one second tube segment (42), wherein the at least two cut ends (8, 9) of the at least one first tube segment (41) are connected to a first surface (31) of the bar base (3) and wherein the at least two cut ends (8,9) of the at least one second tube segment (42) are connected to a second surface (32) of the bar base (3) opposite the first surface (31), wherein particularly along a bar width (W) the first tube segments (41) and the second tube segments (42) are arranged alternately along the bar base (3).

7. Bar (1) according to any one of claims 1 to 6, **characterized in that** the bar base (3) comprises a base height (b) in the direction of the segment height (h) of the tube segments (4) of the bar (1), wherein the ratio of the base height (b) to the bar depth (D) is between 1 to 1 and 1 to 20, in particular between 2 to 3 and 1 to 10.

8. Bar (1) according to any one of claims 1 to 7, **characterized in that** the bar (1) comprises a plurality of tube segments (4) arranged parallel with respect to their longitudinal extension direction with a segment width (w) running perpendicularly to the segment height (h) and the longitudinal extension direction, wherein neighboring tube segments (4) comprise a distance (a) perpendicular to the common longitudinal extension direction, and wherein the distance (a) corresponds to one to two times the segment width (w), in particular exactly to the segment width (w).

9. Sandwich panel (2), in particular for shell construction or interior finishing, wherein the sandwich panel (2) comprises at least one panel layer (11), in particular two panel layers (11), and at least one core layer (13), wherein the at least one panel layer (11) is formed respectively from a panel which comprises a connecting surface (14)
**characterized in that**
the at least one core layer (13) is formed respectively from at least one bar (1) according to one of claims 1 to 8, wherein the at least one bar (1), respectively, is mechanically connected to the connecting surface (14) of the at least one panel layer (11) by means of one of the cut surfaces (6, 7) of its at least one tube segment (4).

10. Sandwich block (26), comprising at least two bar layers (27, 28), which are respectively formed from at least one bar (1) according to one of claims 1 to 8,
**characterized in that**
the bar layers (27, 28) are stacked in direction of the segment height (h) of their bars (1), wherein optionally a block panel layer (29) can be arranged between two neighboring bar layers (27, 28), and wherein in particular the tube segments (4) of the bars (1) are arranged parallel to each other with respect to their respective longitudinal extension direction

11. Sandwich block (26) according to claim 10, **characterized in that** the sandwich block (26) comprises at least one first bar layer (27) and one second bar layer (28), wherein the at least one first bar layer (27) comprises at least one first bar (1a) according to one of claims 1 to 8, and wherein the at least one second bar layer (28) comprises at least one second bar (1b) according to one of claims 1 to 8, and wherein the at least one first bar (1a) of the first bar layer (27) is mechanically connected to the bar base (3) of the adjoining second bar layer (28) by means of at least one wall (5) of at least one of its tube segments (4).

12. Sandwich block (26) according to claim 10, **characterized in that** the sandwich block (26) comprises at least a first bar layer (27) and a second bar layer (28), wherein the at least one first bar layer (27) comprises at least a first bar (1a) according to one of claims 1 to 8, and wherein the at least one second bar layer (28) comprises at least one second bar (1b) according to one of the claims 1 to 8, and wherein the at least one first bar (1a) of the first bar layer (27) is mechanically connected to a wall (5) of the at least one tube segment (4) of the adjoining second bar layer (28) by means of at least one wall (5) of at least one of its tube segments (4).

13. Sandwich block (26) according to claim 10, **characterized in that** the sandwich block (26) comprises at least one bar layer (27, 28) which is formed from at least one first bar (1a) and at least one second bar (1b), wherein the first bar (1a) and the second bar (1b) are respectively formed according to claim 8 and wherein the tube segments (4) of the at least one first bar (1a) and the tube segments (4) of the at least one second bar (1b) are arranged in a common plane, wherein the common plane runs parallel to the extension direction of the bar bases (3) of the first bar (1a) and the second bar (1b), and wherein each tube segment (4) of the first bar (1a) comprises at least one neighboring tube segment (4) of the second bar (1b).

14. Method for manufacturing a sandwich panel (2), in particular according to claim 9, wherein the method comprises at least the following steps:
- arranging and connecting at least one bar (1) according to any one of claims 1 to 8 to the first cut surface (6,7) of the at least one tube segment (4) on a first connecting surface (14) of a first panel layer (11) to form a core layer (13);
- optionally arranging and connecting at least one second connecting surface (19) of a second panel layer (12) on the opposite second cut surface (6,7) of the at least one tube segment (4) of the at least one bar (1).

15. Method for manufacturing a sandwich panel (2), in particular according to claim 9, wherein the method comprises at least the following steps:
- providing a sandwich block (26) according to one of claims 10 to 13, wherein the bar layers (27,28) of the sandwich block (26) are arranged such that the tube segments (4) of the bars (1) are arranged parallel to each other with respect to their longitudinal extension direction.
- producing at least one core layer (13) by cutting the sandwich block (26), in particular transversely to the longitudinal extension direction of the tube segments (4), wherein a plurality of cut surfaces (6, 7) of the tube segments (4) is formed;
- arranging the core layer (13) on a first connecting surface (14) of a first panel layer (11) and connecting the core layer (13) to the first connecting surface (14), wherein the tube segments of the core layer (13) are connected to the connecting surface (14) of the first panel layer (11) by means of their first cut surfaces (6);
- optionally arranging at least a second connecting surface (19) of a second panel layer (12) on the core layer (13) and connecting the second connecting surface (19) to the core layer (13) by means of the second cut surfaces (7) of the tube segments (4) of the core layer (13).

## Revendications

1. Âme (1), notamment pour un panneau sandwich (2), présentant au moins les composants suivants :
i. une base d'âme (3),
ii. au moins un segment tubulaire (4) qui présente une paroi (5) qui est limitée dans la direction circonférentielle du segment tubulaire respectif (4) par au moins deux, notamment exactement deux, extrémités de coupe (8, 9), dans laquelle la paroi (5) est limitée dans la direction d'étendue longitudinale du segment tubulaire (4) par deux faces de coupe (6, 7), et dans laquelle l'au moins un segment tubulaire (4) présente à chaque fois une hauteur de segment (h) qui représente l'étendue maximale du segment tubulaire respectif (4) perpendiculairement à la base d'âme (3), et dans laquelle l'au moins un segment tubulaire (4) présente une profondeur de segment (d) s'étendant dans la direction d'étendue longitudinale,
et dans laquelle l'âme (1) présente une profondeur d'âme (D) qui s'étend dans la direction d'étendue longitudinale de l'au moins un segment tubulaire (4),
**caractérisée en ce**
**que** l'au moins un segment tubulaire (4) est à chaque fois connecté mécaniquement à la base d'âme (3) au moyen des au moins deux extrémités de coupe (8, 9), dans laquelle la profondeur d'âme (D) est égale à la profondeur de segment (d) de l'au moins un segment tubulaire (4), dans laquelle l'au moins un segment tubulaire (4) se compose d'un matériau dérivé du bois ou présente un matériau dérivé du bois.

2. Âme (1) selon la revendication 1, **caractérisée en ce que** l'âme (1) présente au moins deux segments tubulaires (4) qui présentent la même hauteur de segment (h).

3. Âme (1) selon la revendication 1 ou 2, **caractérisée en ce que** la paroi (5) de l'au moins un segment tubulaire (4) présente un aplatissement (51).

4. Âme (1) selon une des revendications 1 à 3, **caractérisée en ce que** l'au moins un segment tubulaire (4) présente à chaque fois une section transversale polygonale, notamment une section transversale en forme de segment octogonal.

5. Âme (1) selon une des revendications 1 à 4, **caractérisée en ce que** l'âme (1) présente au moins deux segments tubulaires (4), dans laquelle les au moins deux extrémités de coupe (8, 9) des au moins deux segments tubulaires (4) sont connectées mécaniquement à une première face (31) de la base d'âme (3).

6. Âme (1) selon une des revendications 1 à 4, **caractérisée en ce que** l'âme (1) présente au moins un premier segment tubulaire (41) et au moins un second segment tubulaire (42), dans laquelle les au moins deux extrémités de coupe (8, 9) de l'au moins un premier segment tubulaire (41) sont connectées à une première face (31) de la base d'âme (3), et dans laquelle les au moins deux extrémités de coupe (8, 9) de l'au moins un second segment tubulaire (42) sont connectées à une seconde face (32) de la base d'âme (3) opposée à la première face (31), dans laquelle les premiers segments tubulaires (41) et les seconds segments tubulaires (42) sont disposés en alternance le long de la base d'âme (3) notamment le long d'une largeur d'âme (W).

7. Âme (1) selon une des revendications 1 à 6, **caractérisée en ce que** la base d'âme (3) présente une hauteur de base (b) en direction de la hauteur de segment (h) des segments tubulaires (4) de l'âme (1), dans laquelle le rapport de la hauteur de base (b) sur la profondeur d'âme (D) est compris entre 1 sur 1 et 1 sur 20, notamment entre 2 sur 3 et 1 sur 10.

8. Âme (1) selon une des revendications 1 à 7, **caractérisée en ce que** l'âme (1) présente une pluralité de segments tubulaires (4) disposés parallèlement par rapport à leur direction d'étendue longitudinale avec une largeur de segment (w) s'étendant perpendiculairement à la hauteur de segment (h) et à la direction d'étendue longitudinale, dans laquelle des segments tubulaires voisins (4) présentent un écart (a) perpendiculairement à la direction d'étendue longitudinale commune, et dans laquelle l'écart (a) correspond au simple jusqu'au double de la largeur de segment (w), notamment à exactement la largeur de segment (w).

9. Panneau sandwich (2), notamment pour le gros œuvre ou la construction intérieure, dans lequel le panneau sandwich (2) présente au moins une couche de panneau (11), notamment deux couches de panneau (11), et au moins une couche de noyau (13), dans lequel l'au moins une couche de panneau (11) est à chaque fois réalisée à partir d'un panneau qui présente une face de connexion (14),
**caractérisé en ce que**
l'au moins une couche de noyau (13) est à chaque fois réalisée à partir d'au moins une âme (1) selon une des revendications 1 à 8, dans lequel l'au moins une âme (1) est à chaque fois connectée mécaniquement à la face de connexion (14) de l'au moins une couche de panneau (11) au moyen d'une des faces de coupe (6, 7) de son au moins un segment tubulaire (4).

10. Bloc sandwich (26), présentant au moins deux couches d'âme (27, 28) qui sont chacune réalisées à partir d'au moins une âme (1) selon une des revendications 1 à 8,
**caractérisé en ce que**
les couches d'âme (27, 28) sont empilées en direction de la hauteur de segment (h) de leurs âmes (1), dans lequel en option, une couche de panneau de bloc (29) peut être disposée entre deux couches d'âme voisines (27, 28) et dans lequel les segments tubulaires (4) des âmes (1) sont notamment disposés parallèlement l'un à l'autre par rapport à leur direction d'étendue longitudinale respective.

11. Bloc sandwich (26) selon la revendication 10, **caractérisé en ce que** le bloc sandwich (26) présente au moins une première couche d'âme (27) et une seconde couche d'âme (28), dans lequel l'au moins une première couche d'âme (27) présente au moins une première âme (1a) selon une des revendications 1 à 8, et dans lequel l'au moins une seconde couche d'âme (28) présente au moins une seconde âme (1b) selon une des revendications 1 à 8, et dans lequel l'au moins une première âme (1a) de la première couche d'âme (27) est connectée mécaniquement à la base d'âme (3) de la seconde couche d'âme adjacente (28) au moyen d'au moins une paroi (5) d'au moins un de ses segments tubulaires (4).

12. Bloc sandwich (26) selon la revendication 10, **caractérisé en ce que** le bloc sandwich (26) présente au moins une première couche d'âme (27) et une seconde couche d'âme (28), dans lequel l'au moins une première couche d'âme (27) présente au moins une première âme (1a) selon une des revendications 1 à 8, et dans lequel l'au moins une seconde couche d'âme (28) présente au moins une seconde âme (1b) selon une des revendications 1 à 8, et dans lequel l'au moins une première âme (1a) de la première couche d'âme (27) est connectée mécaniquement à une paroi (5) de l'au moins un segment tubulaire (4) de la seconde couche d'âme adjacente (28) au moyen d'au moins une paroi (5) d'au moins un de ses segments tubulaires (4).

13. Bloc sandwich (26) selon la revendication 10, **caractérisé en ce que** le bloc sandwich (26) présente au moins une couche d'âme (27, 28) qui est réalisée à partir d'au moins une première âme (1a) et d'au moins une seconde âme (1b), dans lequel la première âme (1a) et la seconde âme (1b)sont chacune réalisées selon la revendication 8, et dans lequel les segments tubulaires (4) de l'au moins une première âme (1a) et les segments tubulaires (4) de l'au moins une seconde âme (1b)sont disposés dans un plan commun, dans lequel le plan commun s'étend parallèlement à la direction d'étendue des bases d'âme (3) de la première âme (1a) et de la seconde âme (1b), et dans lequel chaque segment tubulaire (4) de la première âme (1a) présente au moins un segment tubulaire voisin (4) de la seconde âme (1b).

14. Procédé de fabrication d'un panneau sandwich (2), notamment selon la revendication 9, dans lequel le procédé présente au moins les étapes suivantes :
- disposition et connexion d'au moins une âme (1) selon une des revendications 1 à 8 à la première face de coupe (6, 7) de l'au moins un segment tubulaire (4) sur une première face de connexion (14) d'une première couche de panneau (11) en vue de former une couche de noyau (13) ;
- disposition et connexion optionnelles d'au moins une seconde face de connexion (19) d'une seconde couche de panneau (12) sur la seconde face de coupe opposée (6, 7) de l'au moins un segment tubulaire (4) de l'au moins une âme (1).

15. Procédé de fabrication d'un panneau sandwich (2), notamment selon la revendication 9, dans lequel le procédé présente au moins les étapes suivantes :
- mise à disposition d'un bloc sandwich (26) selon une des revendications 10 à 13, dans lequel les couches d'âme (27, 28) du bloc sandwich (26) sont disposées de telle sorte que les segments tubulaires (4) des âmes (1) sont disposés parallèlement l'un à l'autre par rapport à leur direction d'étendue longitudinale ;
- création d'au moins une couche de noyau (13) par division du bloc sandwich (26), notamment transversalement à la direction d'étendue longitudinale des segments tubulaires (4), dans lequel une pluralité de faces de coupe (6, 7) des segments tubulaires (4) est formée ;
- disposition de la couche de noyau (13) sur une première face de connexion (14) d'une première couche de panneau (11) et connexion de la couche de noyau (13) à la première face de connexion (14), dans lequel les segments tubulaires de la couche de noyau (13) sont connectés à la face de connexion (14) de la première couche de panneau (11) au moyen de leurs premières faces de coupe (6) ;
- disposition optionnelle d'au moins une seconde face de connexion (19) d'une seconde couche de panneau (12) sur la couche de noyau (13) et connexion de la seconde face de connexion (19) à la couche de noyau (13) au moyen des secondes faces de coupe (7) des segments tubulaires (4) de la couche de noyau (13).
